# EUROPEAN PATENT SPECIFICATION

(11) **EP 4 160 372 B1**
(45) Date of publication and mention of the grant of the patent: **26.08.2026**
(21) Application number: 21826147.7
(22) Date of filing: 18.06.2021
(51) Int. Cl.: G06F 3/0481, G06F 3/04842, G06F 3/04883

(54) **METHOD FOR DETERMINING SCREENSHOT AREA, AND RELATED APPARATUS**
VERFAHREN ZUR BESTIMMUNG EINES SCREENSHOT-BEREICHS UND ZUGEHÖRIGE VORRICHTUNG
PROCÉDÉ DE DÉTERMINATION DE ZONE DE CAPTURE D'ÉCRAN ET APPAREIL ASSOCIÉ

(30) Priority: 20.06.2020 CN 202010578519; 27.03.2021 CN 202110329931
(43) Date of publication of application: 05.04.2023
(73) Proprietor: Huawei Technologies Co., Ltd., Longgang District, Shenzhen, Guangdong 518129 (CN)
(72) Inventor: SHAO, Tianyu, Shenzhen, Guangdong 518129 (CN); DING, Ning, Shenzhen, Guangdong 518129 (CN); ZHOU, Xingchen, Shenzhen, Guangdong 518129 (CN)
(74) Representative: Epping - Hermann - Fischer
(86) International application number: PCT/CN2021/101098
(87) International publication number: WO 2021/254510

(56) References cited:
- CN-A- 102 830 963
- CN-A- 103 500 066
- CN-A- 104 778 007
- CN-A- 107 146 198
- CN-A- 110 737 386
- US-A1- 2016 349 983
- US-A1- 2022 334 697

## Description

### TECHNICAL FIELD

This application relates to the field of computer technologies, and in particular, to a screenshot area determining method and a related apparatus.

### BACKGROUND

With continuous development of computer technologies, applications in a terminal have been increasingly enriched. In an information explosion era, a screenshot technology of the terminal is increasingly widely used. A user saves screen information in the terminal by using the screenshot technology, to facilitate viewing and sharing. In the screenshot technology, a growing quantity of terminal users like knuckle screenshots. The user can capture a part of content on the screen of the terminal in a targeted manner by circling the part with a knuckle.

Currently, an image range obtained through a knuckle screenshot is based on an area drawn by a user with a knuckle. Because the area drawn by the user with the knuckle is relatively rough, there may be a deviation from content that the user actually wants to capture. Currently, the deviation needs to be manually corrected. A specific correction manner is as follows: A smallest rectangular box including the area drawn with the knuckle is displayed, and the user may manually drag the rectangular box until the rectangular box covers the content that the user wants to capture. However, such adjustment through dragging increases complexity of human-computer interaction, and consequently, screenshot efficiency is low for the user.

CN 110737386 A1 discloses a screen capture method. The method includes determining a first touch control operation, where the first touch control operation is a movement operation in which a plurality of touch control points move by a distance greater than or equal to a first preset distance threshold in a first screen, the first screen includes N split-screens, and N is a positive integer greater than 1; determining whether start positions of the plurality of touch control points during the movement in the first touch control operation are all located in a target split-screen in the first screen, where the target split-screen is any one of the N split-screens; and if the start positions of the plurality of touch control points during the movement are all located in the target split-screen in the first screen, capturing current display content of the target split-screen as a first screenshot.

### SUMMARY

Embodiments of this application disclose a screenshot area determining method and a related apparatus, so that a screenshot area can be determined more efficiently.

According to a first aspect, an embodiment of this application discloses a screenshot area determining method. The method includes: obtaining a regular geometric area on a display interface of a display; selecting, from a plurality of candidate screenshot areas on the display interface of the display, one candidate screenshot area closest to the geometric area as a screenshot area. The candidate screenshot areas are a plurality of areas including one or more complete interface elements.

It can be learned that, in the foregoing method, the regular geometric area can be obtained based on a touch track, or the regular geometric area circled by a user can be directly obtained. In addition, a candidate screenshot area closest to the geometric area can be intelligently selected from the plurality of candidate screenshot areas. Therefore, an area to be captured by the user is more efficiently and accurately obtained.

In an optional solution of the first aspect, the obtaining a regular geometric area on a display interface of a display includes: obtaining a touch track of the user on the display; and obtaining the regular geometric area based on the touch track.

According to the first aspect, the selecting, from a plurality of candidate screenshot areas on the display interface of the display, one candidate screenshot area closest to the geometric area as a screenshot area includes: calculating an intersection over union IOU between each of the plurality of candidate screenshot areas on the display interface of the display and the geometric area; and selecting a candidate screenshot area with a largest intersection over union IOU as the screenshot area.

It can be learned that, the candidate screenshot area (that is, an area closest to the geometric area) with the largest intersection over union IOU is selected as the screenshot area by calculating the intersection over union IOU. When the largest candidate screenshot area and the geometric area have a same intersection set, a union set is the smallest; when they have a same union set, an intersection set is the largest; and when they have a different intersection set and a different union set, a ratio of the intersection set to the union set is the largest. Therefore, the selected candidate screenshot area with the largest intersection over union IOU is a candidate screenshot area closest to the geometric area. Therefore, the candidate screenshot area with the largest intersection over union IOU is used as the screenshot area, so that an area most desired by the user can be captured.

In another optional solution of the first aspect, a calculation formula of the intersection over union IOU between the candidate screenshot area and the geometric area is as follows: $IOU = \frac{{S}_{area \left(C\right) ∩ area \left(G\right)}}{{S}_{area \left(C\right) ∪ area \left(G\right)}}$
*S*_{*area*(*C*)∩*area*(*G*)} is a size of an intersection set of a candidate screenshot area C and a geometric area G, and
*S*_{*area*(*C*)∪*area*(*G*)} is a size of a union set of the candidate screenshot area C and the geometric area G.

In yet another optional solution of the first aspect, the geometric area is a rectangular area, and all four edges of the rectangular area are tangent to the touch track and parallel to edges of the display.

According to a second aspect, an embodiment of this application provides a screenshot area determining method, including: obtaining a regular geometric area on a display interface of a display; obtaining a target area based on an optimization parameter and the geometric area, where the target area includes at least one of a first area and a second area, the first area includes the geometric area, the second area is included in the geometric area, and the optimization parameter is a preset gain value or an intersection over union IOU; and generating a screenshot area based on the target area.

It can be learned that, in the foregoing method, the geometric area can be optimized by using the preset gain value or the intersection over union IOU, to obtain the first area (for example, a largest screenshot area obtained after the geometric area is enlarged) or the second area (for example, a smallest screenshot area obtained after the geometric area is reduced). This can avoid information loss caused by an error factor, and can determine the screenshot area more intelligently, efficiently, and accurately.

In an optional solution of the second aspect, the obtaining a regular geometric area on a display interface of a display includes: obtaining a touch track of a user on the display; and obtaining the regular geometric area based on the touch track.

In another optional solution of the second aspect, the target area includes the first area. The generating a screenshot area based on the target area includes: generating a first sub-area that can cover all interface elements in the first area and that falls within the first area. The first sub-area is used as the screenshot area.

It can be learned that, in the foregoing method, interface elements that do not completely fall within the first area can be excluded, so that all interface elements of the obtained first sub-area are interface elements that are completely included in the first area. Therefore, interface elements in the screenshot area (the first sub-area herein) are elements to be captured by the user.

In another optional solution of the second aspect, the target area includes the first area and the second area. The generating a screenshot area based on the target area includes: generating the screenshot area based on the first area and the second area.

In another optional solution of the second aspect, the generating the screenshot area based on the first area and the second area includes: selecting, from a target boundary range, a boundary with a smallest variance of pixel values as a target boundary, where the target boundary range is a range between edges that are in a same orientation and that are of the first area and the second area; and forming the screenshot area based on four target boundaries selected from the target boundary ranges in four orientations.

It can be learned that, if a pixel variance in an area in an image is relatively smaller, it indicates that pixel values in the area are closer to each other. Therefore, when a variance of pixels in a row in the image is very small, it indicates that there is no to-be-displayed interface element in the row of pixels. Therefore, in this embodiment of this application, when a boundary with a smallest pixel variance is selected as a boundary of the screenshot area, it can be ensured that all interface elements in an area enclosed by the boundary are complete interface elements.

In another optional solution of the second aspect, the optimization parameter is the IOU, and the target area includes the first area. The obtaining a target area based on an optimization parameter and the geometric area includes: generating at least one largest transition area based on the geometric area and a preset intersection over union IOU threshold; and obtaining the first area based on the at least one largest transition area. The target area is the first area including the at least one largest transition area.

In another optional solution of the second aspect, the optimization parameter is the intersection over union IOU, and the target area includes the first area and the second area. The obtaining a target area based on an optimization parameter and the geometric area includes: generating at least one largest transition area and at least one smallest transition area based on the geometric area and a preset intersection over union IOU threshold; obtaining the first area based on the at least one largest transition area, where the first area includes the at least one largest transition area; and obtaining the second area based on the at least one smallest transition area, where the second area is included in the at least one smallest transition area.

In another optional solution of the second aspect, the optimization parameter is the preset gain value, and the target area is the first area. The obtaining a target area based on an optimization parameter and the geometric area includes: enlarging the geometric area based on a preset positive gain value, to obtain the first area. In another optional solution of the second aspect, the optimization parameter is the preset gain value, and the target area is the first area and the second area. The obtaining a target area based on an optimization parameter and the geometric area includes: enlarging the geometric area based on a preset positive gain value, to obtain the first area; and reducing the geometric area based on a preset negative gain value, to obtain the second area.

It can be learned that, in the foregoing method, the geometric area can be enlarged and reduced by using the preset gain value. This can avoid information loss caused by an error, and can capture content to be circled by the user in the screenshot area more accurately.

According to a third aspect, an embodiment of this application provides a screenshot area determining apparatus, including: a first obtaining unit, configured to obtain a regular geometric area on a display interface of a display; and a selection unit, configured to select, from the plurality of candidate screenshot areas on the display interface of the display, one candidate screenshot area closest to the geometric area as a screenshot area. The candidate screenshot areas are a plurality of areas including one or more complete interface elements.

It can be learned that, in the foregoing method, the regular geometric area can be obtained based on a touch track, or the regular geometric area circled by a user can be directly obtained. In addition, a candidate screenshot area closest to the geometric area can be intelligently selected from the plurality of candidate screenshot areas. Therefore, an area to be captured by the user is more efficiently and accurately obtained. In an optional solution of the third aspect, the first processing unit is specifically configured to calculate an intersection over union IOU between each of the plurality of candidate screenshot areas on the display interface of the display and the geometric area.

In an optional solution of the third aspect, the first obtaining unit is configured to: obtain a touch track of a user on the display, and obtain the regular geometric area based on the touch track.

In another optional solution of the third aspect, the selection unit is specifically configured to: calculate an intersection over union IOU between each of the plurality of candidate screenshot areas on the display interface of the display and the geometric area; and select a candidate area with a largest intersection over union IOU as the screenshot area.

It can be learned that, the candidate screenshot area (that is, an area closest to the geometric area) with the largest intersection over union IOU is selected as the screenshot area by calculating the intersection over union IOU. When the largest candidate screenshot area and the geometric area have a same intersection set, a union set is the smallest; when they have a same union set, an intersection set is the largest; and when they have a different intersection set and a different union set, a ratio of the intersection set to the union set is the largest. Therefore, the selected candidate screenshot area with the largest intersection over union IOU is a candidate screenshot area closest to the geometric area. Therefore, the candidate screenshot area with the largest intersection over union IOU is used as the screenshot area, so that an area most desired by the user can be captured.

In another optional solution of the third aspect, a calculation formula of the intersection over union IOU between the candidate screenshot area and the geometric area is as follows: $IOU = \frac{{S}_{area \left(C\right) ∩ area \left(G\right)}}{{S}_{area \left(C\right) ∪ area \left(G\right)}}$
*S*_{*area*(*C)*∩*area*(*G*)} is a size of an intersection set of a candidate screenshot area C and a geometric area G, and
*S*_{*area*(*C)*∪*area*(*G*)} is a size of a union set of the candidate screenshot area C and the geometric area G.

In yet another optional solution of the third aspect, the geometric area is a rectangular area, and all four edges of the rectangular area are tangent to the touch track and parallel to edges of the display.

According to a fourth aspect, an embodiment of this application provides a screenshot area determining apparatus, including: a second obtaining unit, configured to obtain a regular geometric area on a display interface of a display; a processing unit, configured to obtain a target area based on an optimization parameter and the geometric area, where the target area includes at least one of a first area and a second area, and the optimization parameter is a preset gain value or an intersection over union IOU; and a generation unit, configured to generate a screenshot area based on the target area.

It can be learned that, in the foregoing method, the geometric area can be optimized by using the preset gain value or the intersection over union IOU, to obtain the first area (for example, a largest screenshot area obtained after the geometric area is enlarged) or the second area (for example, a smallest screenshot area obtained after the geometric area is reduced). This can avoid information loss caused by an error factor, and can determine the screenshot area more intelligently, efficiently, and accurately.

In an optional solution of the fourth aspect, the second obtaining unit is configured to: obtain a touch track of a user on the display, and obtain the regular geometric area based on the touch track.

In another optional solution of the fourth aspect, the target area includes the first area. The generation unit is specifically configured to generate a first sub-area that can cover all interface elements in the first area and that falls within the first area. The first sub-area is used as the screenshot area.

It can be learned that, in the foregoing method, interface elements that do not completely fall within the first area can be excluded, so that all interface elements of the obtained first sub-area are interface elements that are completely included in the first area. Therefore, interface elements in the screenshot area (the first sub-area herein) are elements to be captured by the user.

In an optional solution of the fourth aspect, the target area includes the first area and the second area. The generation unit is specifically configured to generate the screenshot area based on the first area and the second area.

In an optional solution of the fourth aspect, the generation unit is specifically configured to: select, from a target boundary range, a boundary with a smallest variance of pixel values as a target boundary, where the target boundary range is a range between edges that are in a same orientation and that are of the first area and the second area; and form the screenshot area based on four target boundaries selected from the target boundary ranges in four orientations. It can be learned that, if a pixel variance in an area in an image is relatively smaller, it indicates that pixel values in the area are closer to each other. Therefore, when a variance of pixels in a row in the image is very small, it indicates that there is no to-be-displayed interface element in the row of pixels. Therefore, in this embodiment of this application, when a boundary with a smallest pixel variance is selected as a boundary of the screenshot area, it can be ensured that all interface elements in an area enclosed by the boundary are complete interface elements.

In another optional solution of the fourth aspect, the optimization parameter is the IOU, and the target area includes the first area. The processing unit is specifically configured to: generate at least one largest transition area based on the geometric area and a preset intersection over union IOU threshold; and obtain the first area based on the at least one largest transition area. The target area is the first area including the at least one largest transition area.

In another optional solution of the fourth aspect, the optimization parameter is the IOU, and the target area includes the first area. The processing unit is specifically configured to: generate at least one largest transition area and at least one smallest transition area based on the geometric area and a preset intersection over union IOU threshold; obtain the first area based on the at least one largest transition area; and obtain the second area based on the at least one smallest transition area. The target area is the first area including the at least one largest transition area and the second area of the at least one smallest transition area.

In another optional solution of the fourth aspect, the optimization parameter is the preset gain value, and the target area is the first area. The processing unit is specifically configured to: enlarge the geometric area based on a preset positive gain value, to obtain the first area.

In another optional solution of the fourth aspect, the optimization parameter is the gain value, and the target area is the first area and the second area. The processing unit is specifically configured to: enlarge the geometric area based on a preset positive gain value, to obtain the first area; and reduce the geometric area based on a preset negative gain value, to obtain the second area.

It can be learned that, in the foregoing method, the geometric area can be enlarged and reduced by using the preset gain value. This can avoid information loss caused by an error, and can capture content that the user wants to circle in the screenshot area more accurately.

According to a fifth aspect, an embodiment of this application provides a terminal, including one or more processors, a memory, and a display. The memory and the display are coupled to the one or more processors, the memory is configured to store computer program code, the computer program code includes computer instructions, and the one or more processors invoke the computer instructions to enable the terminal to implement the method according to any one of the first aspect, the second aspect, the optional solutions of the first aspect, or the optional solutions of the second aspect.

According to a sixth aspect, an embodiment of this application provides a computer-readable storage medium. The computer-readable storage medium stores a computer program. When the computer program is run by a processor, any one of the first aspect, the second aspect, the optional solutions of the first aspect, or the optional solutions of the second aspect is implemented.

According to a seventh aspect, an embodiment of this application provides a computer program product. When the computer program product runs on a processor, the method according to any one of the first aspect, the second aspect, the optional solutions of the first aspect, or the optional solutions of the second aspect in embodiments of this application is implemented.

It may be understood that the apparatus provided in the fifth aspect, the computer-readable storage medium provided in the sixth aspect, and the computer product provided in the seventh aspect are all configured to perform the screenshot area determining method according to any one of the first aspect, the second aspect, the optional solutions of the first aspect, or the optional solutions of the second aspect. Therefore, for beneficial effects that can be achieved by the apparatus, the computer-readable storage medium, and the computer product, refer to beneficial effects in the screenshot area determining method according to any one of the first aspect, the second aspect, the optional solutions of the first aspect, or the optional solutions of the second aspect. Details are not described herein again.

### BRIEF DESCRIPTION OF DRAWINGS

To describe the technical solutions in embodiments of this application or in the conventional technology more clearly, the following briefly describes the accompanying drawings for describing embodiments or the conventional technology. It is clear that the accompanying drawings in the following description show some embodiments of this application, and a person of ordinary skill in the art may still derive other drawings from these accompanying drawings without creative efforts.
FIG. 1 is a schematic diagram of an architecture in which a screenshot area is determined according to an embodiment of this application;
FIG. 2 is a schematic diagram of a structure of a target terminal 200 according to an embodiment of this application;
FIG. 3 is a block diagram of a software structure of a target terminal 200 according to an embodiment of this application;
FIG. 4 is a schematic diagram of a scenario in which a screenshot area is determined according to an embodiment of this application;
FIG. 5 is a schematic diagram of another scenario in which a screenshot area is determined according to an embodiment of this application;
FIG. 6 is a schematic diagram of a scenario in which a touch track is obtained according to this application;
FIG. 7 is a schematic diagram of a scenario of a candidate area according to an embodiment of this application;
FIG. 8 is a schematic diagram of a scenario in which a screenshot area is generated according to an embodiment of this application;
FIG. 9 is a schematic diagram of a scenario in which a first area and/or a second area are/is obtained based on a geometric area according to an embodiment of this application;
FIG. 10 is a schematic diagram of a structure in which a first area is obtained based on a geometric area according to an embodiment of this application;
FIG. 11 is a schematic diagram of a structure in which a second area is obtained based on a geometric area according to an embodiment of this application;
FIG. 12 is a schematic diagram of a scenario in which a screenshot area is generated according to an embodiment of this application;
FIG. 13 is a schematic flowchart of a screenshot area determining method according to an embodiment of this application;
FIG. 14 is a schematic diagram of a scenario in which a screenshot area is edited according to an embodiment of this application;
FIG. 15 is a schematic flowchart in which a screenshot area is determined according to an embodiment of this application;
FIG. 16 is a schematic diagram of a structure of a screenshot area determining apparatus according to an embodiment of this application; and
FIG. 17 is a schematic diagram of a structure of another screenshot area determining apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

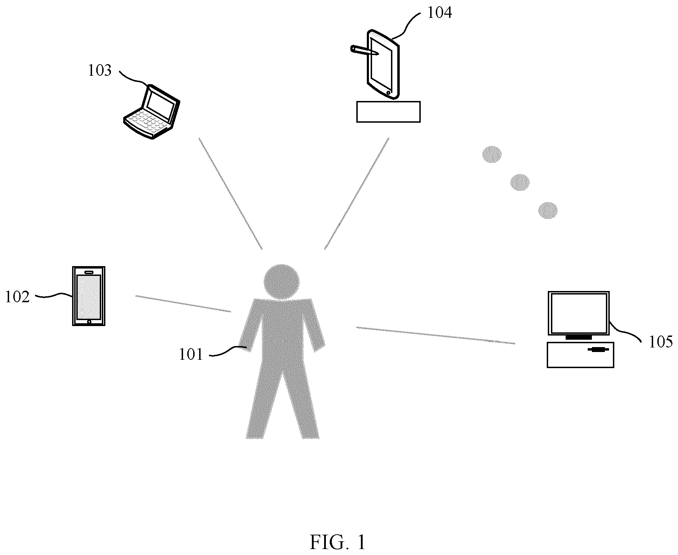

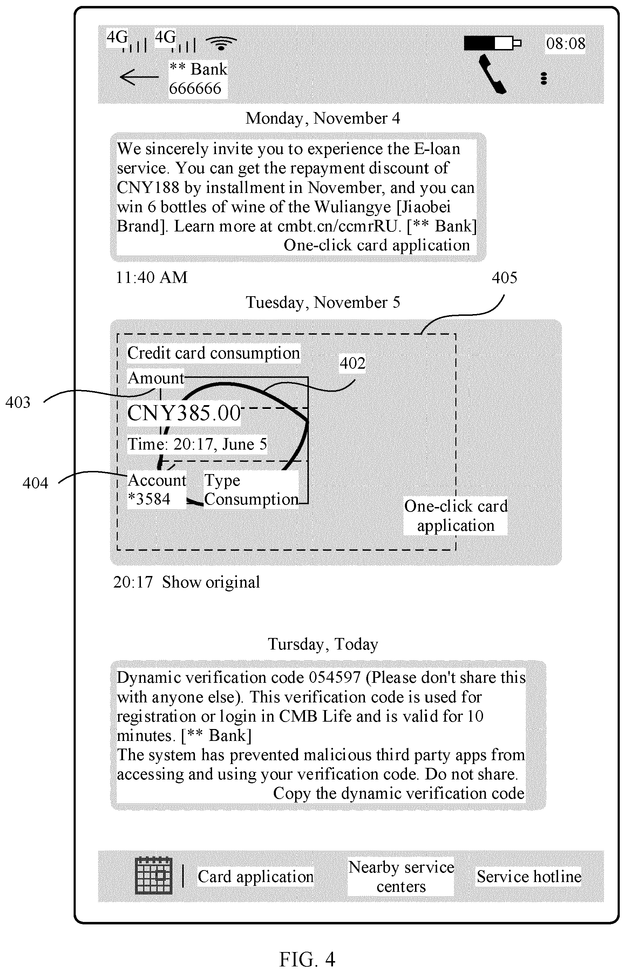

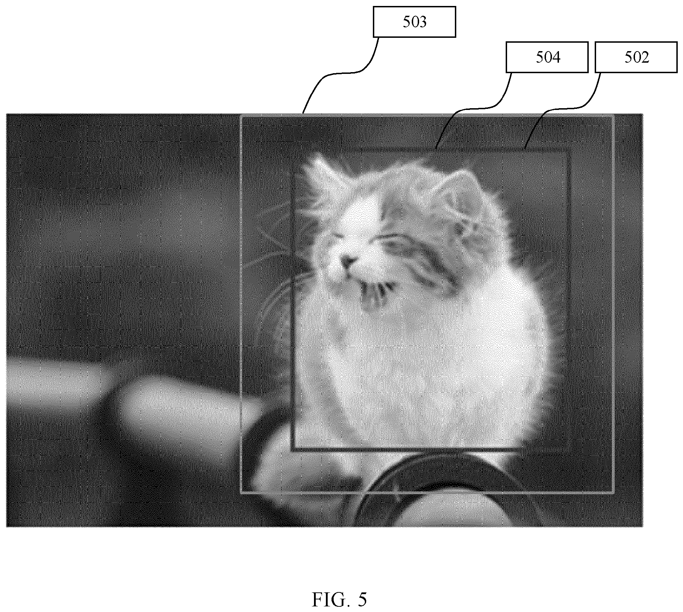

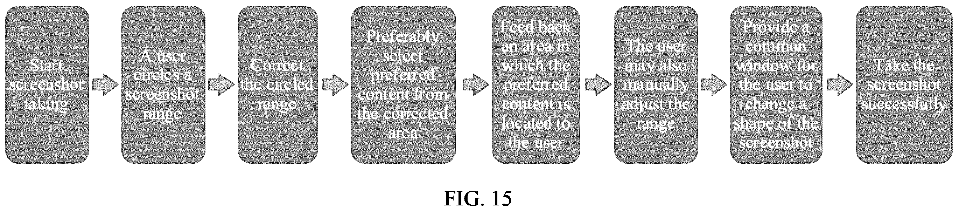

FIG. 1 is a schematic diagram of an architecture in which a screenshot area is determined according to an embodiment of this application. The schematic diagram of the architecture includes a user 101 and a terminal. The terminal may be a smartphone 102, a notebook computer 103, a tablet computer 104, a desktop computer 105, or another terminal. The user 101 may circle content to be captured on the terminal by using a knuckle or a controller (for example, a mouse). In a first manner, the terminal receives an operation behavior (for example, a touch track of the user on the display, for example, 402 in FIG. 4) performed by the user on a display of the terminal, and the terminal obtains a regular geometric area (for example, an externally tangent rectangle of the touch track) based on the touch track. In a second manner, the user 101 may further circle a regular geometric area, for example, 502 in FIG. 5, on the terminal by using a controller (for example, a mouse). Correspondingly, the terminal receives an operation behavior (for example, the regular geometric area circled by the user on the terminal) performed by the user on the display of the terminal. In an aspect, the terminal can identify a plurality of candidate screenshot areas (the candidate screenshot area may be a candidate screenshot area including one element, or may be a candidate screenshot area including a plurality of elements) on the display interface of the display, and select, by using a method of calculating an intersection over union IOU, a candidate screenshot area closest to the geometric area as the screenshot area. In another aspect, the terminal can optimize the geometric area based on a preset gain value or an intersection over union IOU, to obtain a target area, that is, a first area and/or a second area. The first area includes the geometric area, and the second area is included in the geometric area (for example, the first area is a largest rectangular area obtained after the geometric area is enlarged, and the second area is a smallest rectangular area obtained after the geometric area is reduced). The terminal generates the screenshot area based on the first area and/or the second area, and feeds back the screenshot area to the user by using the display. The user may adjust the screenshot area (for example, select a shape of the screenshot area by using a selection button). A schematic flowchart in which a screenshot area is determined is shown in FIG. 15. First, screenshot taking is started, and then the user circles a screenshot range. In other words, the user may circle the content to be captured on the terminal by using the knuckle or the controller (for example, a mouse). Second, the terminal corrects the circled range, and determines a largest range and a smallest range of the content to be captured by the user. In other words, the terminal determines the first area and/or the second area based on the regular geometric area. Then, the terminal preferably selects, from the corrected area, the content that the user wants to capture most, that is, the terminal generates the screenshot area based on the first area and/or the second area; and then feeds back the area in which the preferred content is located to the user, that is, the terminal may feed back the generated screenshot area to the user. Then, the user may manually adjust an area range, that is, the user may manually adjust a range of the screenshot area. The terminal device provides a common window for the user to change a shape of the screenshot, for example, "a heart shape" or "a circle". In other words, the user may tap, in a shape editing area based on the screenshot area, a button for changing a shape (for example, a shape such as "the heart shape" or "the circle") of the screenshot, to obtain a screenshot after the shape is changed. Finally, the screenshot is taken successfully, that is, the screenshot area is determined.

It can be learned that, in one method, the regular geometric area can be obtained based on the touch track, or the regular geometric area circled by the user can be directly obtained. In addition, the candidate screenshot area closest to the geometric area can be intelligently selected from the plurality of candidate screenshot areas. Therefore, an area to be captured by the user is more efficiently and accurately obtained. In the other method, the geometric area can be optimized as the first area or the second area by using the preset gain value or the intersection over union IOU. This can avoid information loss caused by an error factor, and can determine the screenshot area more intelligently, efficiently, and accurately.

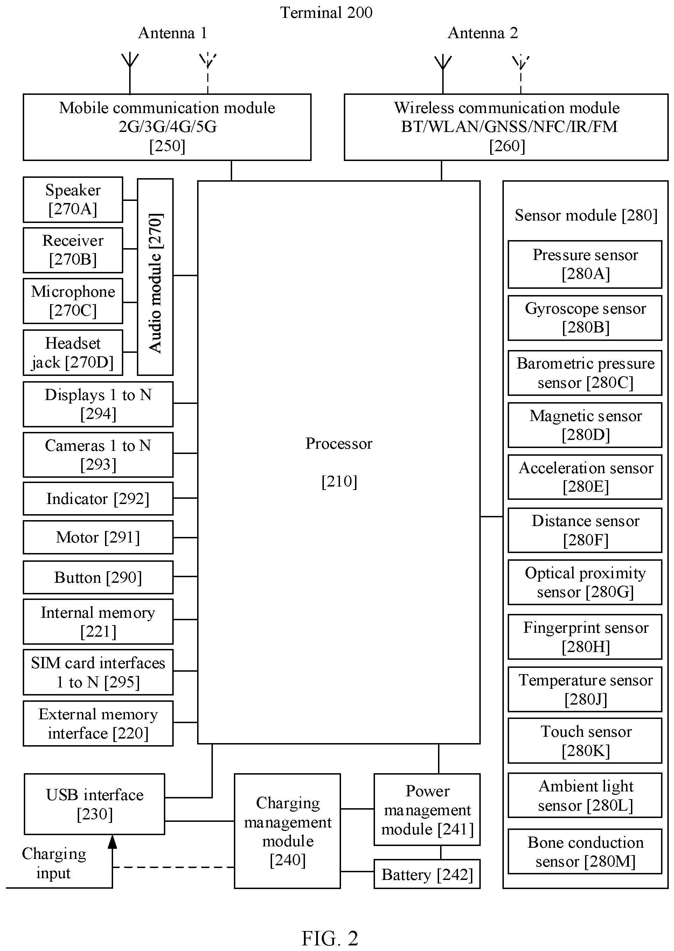

FIG. 2 is a schematic diagram of a structure of a target terminal 200 according to an embodiment of this application. The target terminal 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a sensor 280K, an ambient light sensor 280L, a bone conduction sensor 280M, and the like.

It may be understood that the structure shown in this embodiment of this application does not constitute a specific limitation on the target terminal 200. In some other embodiments of this application, the target terminal 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 210, and is configured to store instructions and data. In some embodiments, the memory in the processor 210 is a cache memory. The memory may store instructions or data just used or cyclically used by the processor 210. If the processor 210 needs to use the instructions or the data again, the processor may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 210 may include a plurality of groups of I2C buses. The processor 210 may be separately coupled to the touch sensor 280K, a charger, a flash, the camera 293, and the like by using different I2C bus interfaces. For example, the processor 210 may be coupled to the touch sensor 280K through the I2C interface, so that the processor 210 communicates with the touch sensor 280K through the I2C bus interface, to implement a touch function of the target terminal 200.

The I2S interface may be configured to perform audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may transmit an audio signal to the wireless communication module 260 through the I2S interface, to implement a function of answering a call through a Bluetooth headset.

The PCM interface may also be used to perform audio communication, and sample, quantize, and code an analog signal. In some embodiments, the audio module 270 may be coupled to the wireless communication module 260 through a PCM bus interface. In some embodiments, the audio module 270 may alternatively transfer an audio signal to the wireless communication module 260 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 210 and the wireless communication module 260. For example, the processor 210 communicates with a Bluetooth module in the wireless communication module 260 through the UART interface, to implement a Bluetooth function. In some embodiments, the audio module 270 may transmit an audio signal to the wireless communication module 260 through the UART interface, to implement a function of playing music through a Bluetooth headset.

The MIPI interface may be configured to connect the processor 210 and a peripheral component such as the display 294 or the camera 293. The MIPI interface includes a camera serial interface (camera serial interface, CSI), a display serial interface (display serial interface, DSI), and the like. In some embodiments, the processor 210 communicates with the camera 293 through the CSI interface, to implement a photographing function of the target terminal 200. The processor 210 communicates with the display 294 through the DSI interface, to implement a display function of the target terminal 200.

The GPIO interface may be configured by using software. The GPIO interface may be configured as a control signal or a data signal. In some embodiments, the GPIO interface may be configured to connect the processor 210 to the camera 293, the display 294, the wireless communication module 260, the audio module 270, the sensor module 280, or the like. The GPIO interface may alternatively be configured as an I2C interface, an I2S interface, a UART interface, an MIPI interface, or the like.

The USB interface 230 is an interface that conforms to a USB standard specification, and may be specifically a mini USB interface, a micro USB interface, a USB Type-C interface, or the like. The USB interface 230 may be configured to connect to the charger to charge the target terminal 200, may be configured to transmit data between the target terminal 200 and a peripheral device, or may be configured to connect to a headset for playing audio through the headset. The interface may be further configured to connect to another terminal such as an AR device.

It may be understood that an interface connection relationship between the modules in this embodiment of this application is merely an example for description, and does not constitute a limitation on the structure of the target terminal 200. In some other embodiments of this application, the target terminal 200 may alternatively use an interface connection manner different from that in the foregoing embodiment, or a combination of a plurality of interface connection manners.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input by using a wireless charging coil of the target terminal 200. When charging the battery 242, the charging management module 240 may further charge the terminal by using the power management module 241.

The power management module 241 is configured to connect to the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like. The power management module 241 may be further configured to monitor parameters such as a battery capacity, a battery cycle count, and a battery health status (an electric leakage or impedance). In some other embodiments, the power management module 241 may alternatively be disposed in the processor 210. In some other embodiments, the power management module 241 and the charging management module 240 may alternatively be disposed in a same device.

A wireless communication function of the target terminal 200 may be implemented through the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the target terminal 200 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 250 can provide a wireless communication solution that is applied to the target terminal 200 and that includes 2G/3G/4G/5G or the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some function modules in the mobile communication module 250 may be disposed in the processor 210.

In some embodiments, at least some function modules in the mobile communication module 250 may be disposed in a same component as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing.

The low-frequency baseband signal is processed by the baseband processor and then transmitted to the application processor. The application processor outputs a sound signal by using an audio device (which is not limited to the speaker 270A, the receiver 270B, and the like), or displays an image or a video by using the display 294. In some embodiments, the modem processor may be an independent component. In some other embodiments, the modem processor may be independent of the processor 210, and is disposed in a same component as the mobile communication module 250 or another function module.

The wireless communication module 260 may provide a wireless communication solution that is applied to the target terminal 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 260 may be one or more components integrating at least one communication processor module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the target terminal 200, the antenna 1 is coupled to the mobile communication module 250, and the antenna 2 is coupled to the wireless communication module 260, so that the target terminal 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The target terminal 200 implements the display function through the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, or the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the target terminal 200 may include one or N displays 294, where N is a positive integer greater than 1. The target terminal 200 may implement an image shooting function by using the ISP, the camera 293, the video codec, the GPU, the display 294, the application processor, and the like.

The ISP is configured to process data fed back by the camera 293. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 293. The camera 293 is configured to capture a static image or a video. An optical image of an object is generated through the lens, and is projected onto the photosensitive element. The photosensitive may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the target terminal 200 may include one or N cameras 293, where N is a positive integer greater than 1.

The digital signal processor is configured to process a digital signal, and may process another digital signal in addition to the digital image signal. For example, when the target terminal 200 selects a frequency, the digital signal processor is configured to perform Fourier transform and the like on frequency energy.

The video codec is configured to compress or decompress a digital video. The target terminal 200 may support one or more video codecs. In this way, the target terminal 200 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, with reference to a transfer mode between human brain neurons, and may further continuously perform self-learning. The NPU can implement applications such as intelligent cognition of the terminal 100, such as image recognition, facial recognition, speech recognition, and text understanding.

The external memory interface 220 may be configured to connect to an external storage card, for example, a micro SD card, to extend a storage capability of the target terminal 200. The external storage card communicates with the processor 210 through the external memory interface 220, to implement a data storage function. For example, files such as music and videos are stored in the external storage card.

The internal memory 221 may be configured to store computer-executable program code. The executable program code includes instructions. The internal memory 221 may include a program storage area and a data storage area. The program storage area may store an operating system, an application required by at least one function (for example, a sound playing function or an image playing function), and the like. The data storage area may store data (for example, audio data and a phone book) and the like created during use of the target terminal 200. In addition, the internal memory 221 may include a high-speed random access memory, and may further include a nonvolatile memory, for example, at least one magnetic disk storage device, a flash memory device, or a universal flash storage (universal flash storage, UFS). The processor 210 runs instructions stored in the internal memory 221 and/or instructions stored in the memory disposed in the processor, to perform various function applications of the target terminal 200 and data processing.

The target terminal 200 may implement audio functions such as music playing and recording by using the audio module 270, the speaker 270A, the receiver 270B, the microphone 270C, the headset jack 270D, the application processor, and the like.

The audio module 270 is configured to convert digital audio information into an analog audio signal for output, and is also configured to convert an analog audio input into a digital audio signal. The audio module 270 may be further configured to code and decode an audio signal. In some embodiments, the audio module 270 may be disposed in the processor 210, or some function modules in the audio module 270 are disposed in the processor 210.

The speaker 270A, also referred to as a "loudspeaker", is configured to convert an audio electrical signal into a sound signal. The target terminal 200 may be used to listen to music or answer a hands-free call through the speaker 270A. The receiver 270B, also referred to as an "earpiece", is configured to convert an audio electrical signal into a sound signal. When the target terminal 200 is used to answer a call or listen to a voice message, the receiver 270B may be put close to a human ear to listen to voice.

The microphone 270C, also referred to as a "mike" or a "mic", is configured to convert a sound signal into an electrical signal. When making a call or sending voice information, a user may make a sound by moving a human mouth close to the microphone 270C to input a sound signal to the microphone 270C. At least one microphone 270C may be disposed in the target terminal 200. In some other embodiments, two microphones 270C may be disposed in the target terminal 200, to collect a sound signal and implement a noise reduction function. In some other embodiments, three, four, or more microphones 270C may alternatively be disposed in the target terminal 200, to collect a sound signal, reduce noise, and identify a sound source, to implement a directional recording function and the like.

The headset jack 270D is configured to connect to a wired headset. The headset jack 270D may be the USB interface 230, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 280A is configured to sense a pressure signal, and may convert the pressure signal into an electrical signal. In some embodiments, the pressure sensor 280A may be disposed on the display 294. There are many types of pressure sensors 280A, such as a resistive pressure sensor, an inductive pressure sensor, and a capacitive pressure sensor. The capacitive pressure sensor may include at least two parallel plates made of conductive materials. Capacitance between electrodes changes when a force is applied to the pressure sensor 280A. The target terminal 200 determines pressure strength based on a capacitance change. When a touch operation is performed on the display 294, the target terminal 200 detects strength of the touch operation through the pressure sensor 280A. The target terminal 200 may also calculate a touch position based on a detection signal of the pressure sensor 280A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing a message is performed. When a touch operation whose touch operation intensity is greater than or equal to the first pressure threshold is performed on the SMS message application icon, an instruction for creating a new SMS message is performed.

The gyroscope sensor 280B may be configured to determine a motion posture of the target terminal 200. In some embodiments, angular velocities of the target terminal 200 around three axes (namely, x, y, and z axes) may be determined by using the gyroscope sensor 280B. The gyroscope sensor 280B may be configured to implement image stabilization during image shooting. For example, when the shutter is opened, the gyroscope sensor 280B detects an angle at which the target terminal 200 jitters, calculates, based on the angle, a distance for which a lens module needs to compensate, and allows the lens to cancel the jitter of the target terminal 200 through reverse motion, to implement image stabilization. The gyroscope sensor 280B may also be used in a navigation scenario and a somatic game scenario. The barometric pressure sensor 280C is configured to measure barometric pressure. In some embodiments, the target terminal 200 calculates an altitude through a barometric pressure value measured by the barometric pressure sensor 280C, to assist positioning and navigation.

The magnetic sensor 280D includes a Hall effect sensor. The target terminal 200 may detect opening and closing of a flip leather case through the magnetic sensor 280D. In some embodiments, when the target terminal 200 is a clamshell phone, the target terminal 200 may detect opening and closing of a flip cover through the magnetic sensor 280D. Further, a feature such as automatic unlocking of the flip cover is set based on a detected opening or closing state of the leather case or a detected opening or closing state of the flip cover.

The acceleration sensor 280E may detect accelerations in various directions (usually on three axes) of the target terminal 200, and may detect a magnitude and a direction of gravity when the target terminal 200 is still. The acceleration sensor 280E may be further configured to recognize a posture of a terminal, and is applied in an application such as a pedometer or screen switching between a landscape mode and a portrait mode.

The distance sensor 280F is configured to measure a distance. The target terminal 200 may measure a distance through infrared light or laser. In some embodiments, the target terminal 200 may use the distance sensor 280F to measure a distance, to implement fast focusing in an image shooting scenario.

The optical proximity sensor 280G may include a light emitting diode (LED) and an optical detector, for example, a photodiode. The light emitting diode may be an infrared light emitting diode. The target terminal 200 emits infrared light outwards by using the light-emitting diode. The target terminal 200 detects infrared reflected light from a nearby object by using the photodiode. When sufficient reflected light is detected, it may be determined that there is an object near the target terminal 200. When insufficient reflected light is detected, the target terminal 200 may determine that there is no object near the target terminal 200. The target terminal 200 may detect, by using the optical proximity sensor 280G, that a user holds the target terminal 200 close to an ear to make a call, to automatically turn off a screen for power saving The optical proximity sensor 280G may also be used for automatic screen unlocking and locking in a smart cover mode or a pocket mode.

The ambient light sensor 280L is configured to sense ambient light brightness. The target terminal 200 may adaptively adjust brightness of the display 294 based on the sensed ambient light brightness. The ambient light sensor 280L may also be configured to automatically adjust white balance during photographing. The ambient light sensor 280L may further cooperate with the optical proximity sensor 280G to detect whether the target terminal 200 is in a pocket to prevent an accidental touch.

The fingerprint sensor 280H is configured to collect a fingerprint. The target terminal 200 may remove the fingerprint port 295 by using a collected fingerprint feature, to implement contact with or separation from the target terminal 200. The target terminal 200 may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The plurality of cards may be of a same type or different types. The SIM card interface 295 may also be compatible with different types of SIM cards. The SIM card interface 295 may also be compatible with the external storage card. The target terminal 200 interacts with a network via the SIM card, to implement functions such as calling and data communication. In some embodiments, the target terminal 200 uses an eSIM, namely, an embedded SIM card. The eSIM card may be embedded in the target terminal 200, and cannot be separated from the target terminal 200.

A software system of the target terminal 200 may use a layered architecture, an event-driven architecture, a microkernel architecture, a micro service architecture, or a cloud architecture. In embodiments of this application, an Android system with a hierarchical architecture is used as an example to describe a software structure of the target terminal 200.

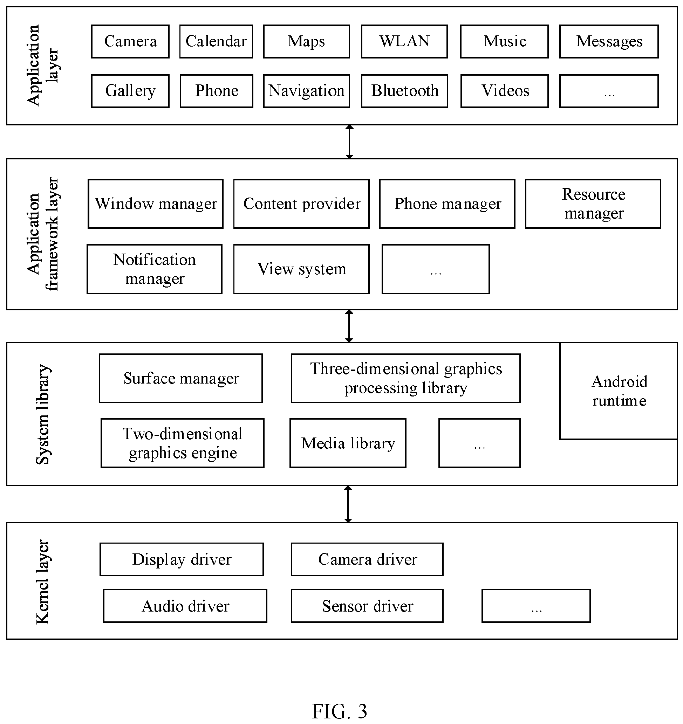

FIG. 3 is a block diagram of a soft structure of a target terminal 200 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application program. The data may include a video, an image, an audio, calls that are made and answered, a browsing history and bookmarks, an address book, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The phone manager is configured to provide a communication function for the target terminal 200, for example, management of a call status (including answering, declining, or the like).

The resource manager provides various resources such as a localized character string, an icon, an image, a layout file, and a video file for an application program.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert sound is played, the terminal vibrates, and the indicator light blinks.

The Android runtime includes a kernel library and a virtual machine. The Android runtime is responsible for scheduling and management of the Android system.

The core library includes two parts: a function that needs to be invoked in java language, and a core library of Android. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes, by using an example, working procedures of software and hardware of the target terminal 200 with reference to an application process of determining a screenshot area.

When the touch sensor 280K receives a touch operation, a corresponding hardware interrupt may be sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is an operation of a touch track on the display 294. The sensor driver and an interface of the application framework layer is enabled by invoking the kernel layer, to determine the screenshot area.

Based on the foregoing screenshot area determining method and the target terminal, the following describes in detail main technologies used for implementing embodiments of this application.

FIG. 4 is a schematic diagram of a scenario in which a screenshot area is determined according to an embodiment of this application. The schematic diagram of the scenario includes a touch track 402 of a user on a display, a geometric area 403 of the touch track (the geometric rectangle is an externally tangent rectangle of the touch track), a first area 404 (the first area is an area obtained after the geometric area is enlarged), and a second area 405 (the second area is an area obtained after the geometric area is reduced). An example in which the terminal is a smartphone 102 is used for illustration in FIG. 4.

FIG. 5 is a schematic diagram of another scenario in which a screenshot area is determined according to an embodiment of this application. The schematic diagram of the scenario includes a regular geometric area 502 circled by the user on the terminal by using a mouse, a first area 503 (the first area is an area obtained after the geometric area is enlarged), and a second area 504 (the second area is the geometric area).

Based on the foregoing schematic diagram of the scenario, a main technology in this embodiment of this application may include the following parts. Case 1: The regular geometric area on a display interface of the display is obtained, and the screenshot area is generated based on the foregoing geometric area. Case 2: The first area 404 and/or the second area 405 are/is obtained based on the geometric area, and the screenshot area is generated based on the first area 404 and/or the second area 405. Alternatively, the first area 503 and/or the second area 504 are/is obtained based on the geometric area, and the screenshot area is generated based on the first area 503 and/or the second area 504. The following describes the foregoing two cases in more detail.

Case 1: The target terminal 200 obtains the regular geometric area on the display interface of the display.

The target terminal 200 may obtain the geometric area on the display interface of the display in the following two manners. In a first manner, the user may circle the regular geometric area on the terminal by using a controller (for example, a mouse), and correspondingly, the terminal receives the regular geometric area circled by the user on the display of the terminal. In a second manner, the target terminal 200 obtains a touch track of the user on the display, and then obtains the regular geometric area based on the touch track. Specific explanations of the second manner are as follows:
First, the target terminal 200 obtains a touch track 402 of the user on a touchscreen.

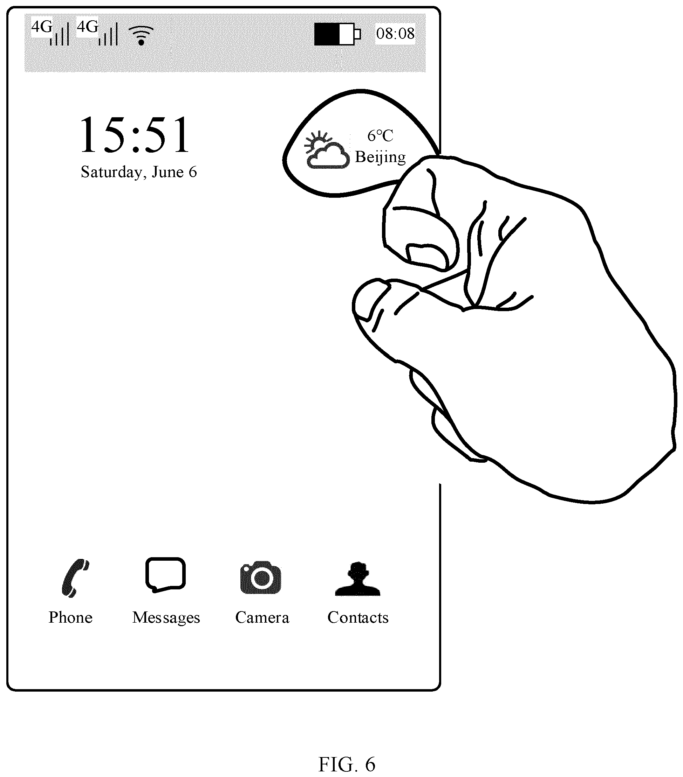

Optionally, the terminal may detect a touch track (the touch track may be regular or irregular) drawn by the user with a knuckle on the terminal. FIG. 6 is a schematic diagram of a scenario in which a touch track is obtained according to this application. According to the schematic diagram of the structure of the terminal shown in FIG. 2, the terminal enables the sensor 280K and detects the touch track, to obtain the touch track of the user on the display 294. Optionally, the terminal (a notebook computer is used as an example herein) may also detect a touch track drawn by the user on the terminal by using a controller (for example, a mouse), to obtain the touch track of the user on the display.

Then, the target terminal 200 obtains the regular geometric area 403 based on the touch track 402, or generates the screenshot area based on the geometric area 502.

Specifically, the terminal makes an externally tangent rectangle of the touch track for the touch track, to obtain the regular geometric area. To be specific, based on an orientation of an upper boundary of the terminal, the terminal makes a straight line parallel to the upper boundary of the terminal, and there is only one intersection point of the straight line and the touch track. Similarly, based on orientations of a lower boundary, a left boundary, and a right boundary of the terminal, the terminal separately makes four straight lines corresponding to the touch track. A rectangular area formed by the four straight lines is the geometric area.

Finally, the target terminal 200 may generate the screenshot area based on the geometric area 403.

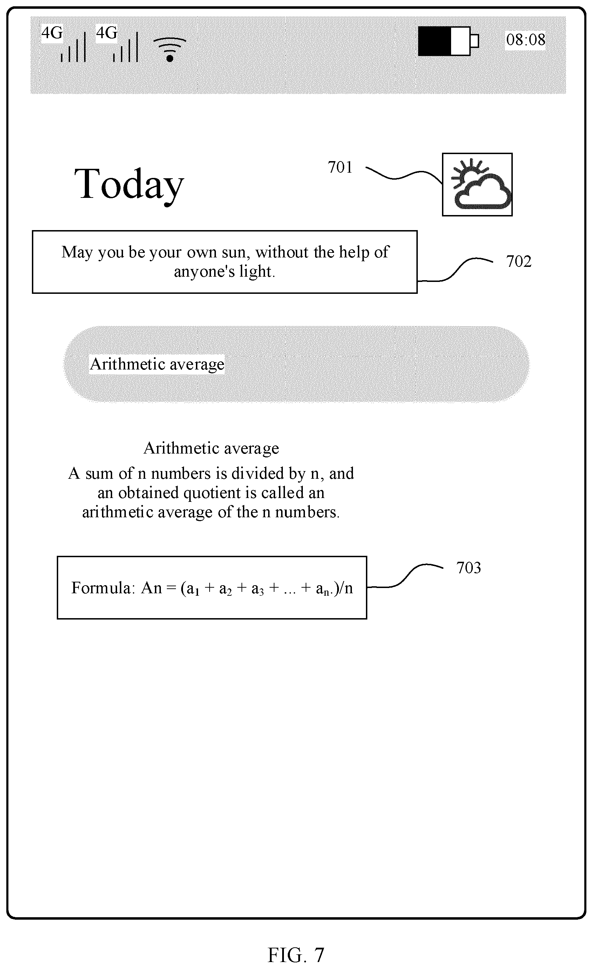

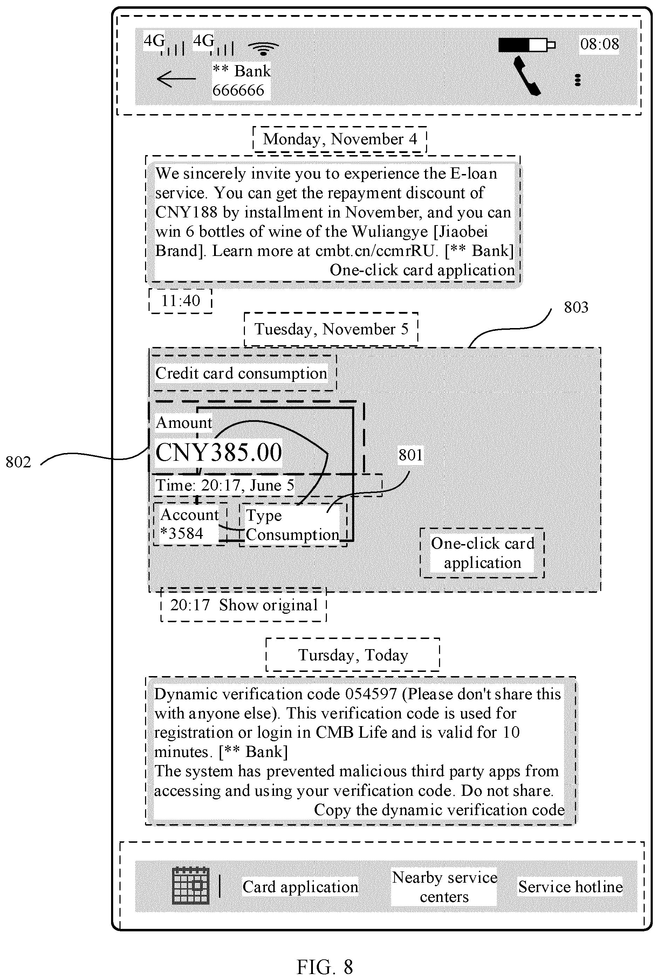

Specifically, the terminal may obtain a plurality of candidate screenshot areas on a current interface of the terminal by using a mechanism of an operating system (for example, an Android system). The candidate screenshot area may be an area including one element, or may be an area including a plurality of elements, and the element is a smallest display unit on the display interface, for example, may be a text, an icon, a formula, or another element. FIG. 7 is a schematic diagram of a scenario of a candidate screenshot area according to an embodiment of this application. The schematic diagram includes: a candidate screenshot area 701 in which an icon is located, a candidate screenshot area 702 in which a text is located, and a candidate screenshot area 703 in which a formula is located. The terminal calculates an intersection over union IOU between each candidate screenshot area and the geometric area based on the plurality of candidate screenshot areas and the geometric area, and selects a candidate screenshot area with a largest value of the intersection over union IOU as the screenshot area. The intersection over union IOU is a ratio of a size of an intersection set of the candidate screenshot area and the geometric area to a size of a union set of the candidate screenshot area and the geometric area. The following uses examples for description. FIG. 8 is a schematic diagram of a scenario in which a screenshot area is generated according to an embodiment of this application. The schematic diagram includes a geometric area 801, a screenshot area 802, and an example area 803. It can be learned from FIG. 8 that the terminal obtains a plurality of candidate screenshot areas on a current interface of the terminal by using a mechanism of a system. Each rectangular area circled by dashed lines in FIG. 8 is referred to as a candidate screenshot area. The candidate screenshot area may be an area covering one interface element (for example, a candidate screenshot area covering an interface element "Account *3584" in FIG. 8), or may be an area covering a plurality of interface elements (for example, the example area 803 in FIG. 8). After a value of the intersection over union IOU between each candidate screenshot area and the geometric area is calculated according to a calculation formula of the intersection over union IOU, the values of the intersection over union IOU are compared, to obtain a largest value of the intersection over union IOU between the candidate screenshot area covering an interface element "Amount CNY385.00 " and the geometric area. In this case, the terminal selects the candidate screenshot area covering the interface element "Amount CNY385.00 " as the screenshot area. For the target terminal 200 generating the screenshot area based on the geometric area 502, refer to an example in which the target terminal 200 may generate the screenshot area based on the geometric area 403. Details are not described herein again.

Case 2: First, the first area 404 and/or the second area 405 are/is obtained based on the geometric area 403. Alternatively, the first area 503 and/or the second area 504 are/is obtained based on the geometric area 502.

Optionally, the terminal may obtain the first area and/or the second area based on a preset gain value. In a same plane, the terminal may add a positive gain value or a negative gain value (the positive gain value or the negative gain value may be a preset parameter, and the positive gain value or the negative gain value may be the same or different) to a direction perpendicular to four edge lengths based on straight lines on which the four edge lengths of the geometric area are located. The positive gain value is used to enlarge the geometric area, and the negative gain value is used to reduce the geometric area. In addition, the screenshot area generated by the terminal is not larger than the first area, and/or is not smaller than the second area. The following uses an example for description.

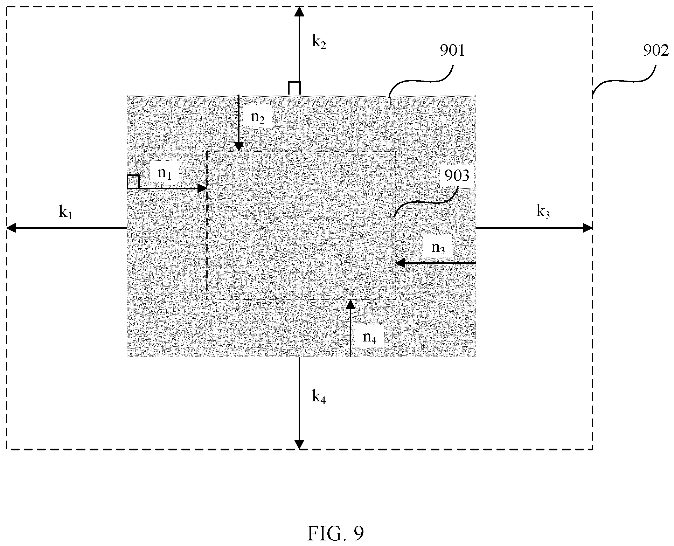

FIG. 9 is a schematic diagram of a scenario in which a first area and/or a second area are/is obtained based on a geometric area according to an embodiment of this application. The schematic diagram includes a geometric area 901, a first area 902, and a second area 903. It can be learned from FIG. 9 that straight lines on which four edge lengths of the geometric area are located increase positive gain values (that is, moving outwards by a specific distance) of k1, k2, k3, and k4 (k1, k2, k3, and k4 may be respectively 2 mm, 3 mm, 1 mm, and 1 mm) in a direction perpendicular to the straight lines, to obtain the first area. The straight lines on which the four edge lengths of the geometric area are located increase negative gain values (that is, moving inwards by a specific distance) of n1, n2, n3, and n4 (n1, n2, n3, and n4 may be respectively 1 mm, 0.5 mm, 2 mm, and 1 mm), to obtain the second area. For setting of the positive gain value or the negative gain value, the terminal performs intelligent analysis based on a size of a contact area formed between the knuckle of the user and the screen, to obtain the positive gain value and the negative gain value. For example, when the contact area between the user and the terminal screen is not smaller than 2 mm², the positive gain values are set to 2 mm, 3 mm, 1 mm, and 1 mm, or the negative gain values are set to 1 mm, 0.5 mm, 2 mm, and 1 mm. When the contact area between the user and the terminal screen is smaller than 2 mm², the positive gain values are set to 1 mm, 2 mm, 0.5 mm, and 1 mm, or the negative gain values are set to 0.5 mm, 1 mm, 1 mm, and 0.5 mm. Optionally, the terminal may also obtain a transition area based on the geometric area and the intersection over union IOU, and obtain the first area and/or the second area based on the transition area. The following uses an example for description.

If a size of the geometric area is S_{G}, and a size of the transition area is S_{C}, an intersection over union between the transition area and the geometric area is: $IOU = \frac{{S}_{C} ∩ {S}_{G}}{{S}_{C} ∪ {S}_{G}} ,$ that is, $IOU = \frac{{S}_{C ∩ G}}{{S}_{C} + {S}_{G} - {S}_{C ∩ G}}$

To better obtain the first area (the area includes the geometric area), the transition area needs to include the geometric area. When the transition area of the first area is calculated, a calculation formula of the IOU is: $IOU = \frac{{S}_{G}}{{S}_{C} + {S}_{G} - {S}_{G}} ,$ that is, $IOU = \frac{{S}_{G}}{{S}_{C}}$

If a preset intersection over union IOU is not less than 0.8, a largest transition area, of the first area, obtained according to an inequality calculation rule is $\frac{5}{4} {S}_{G}$.

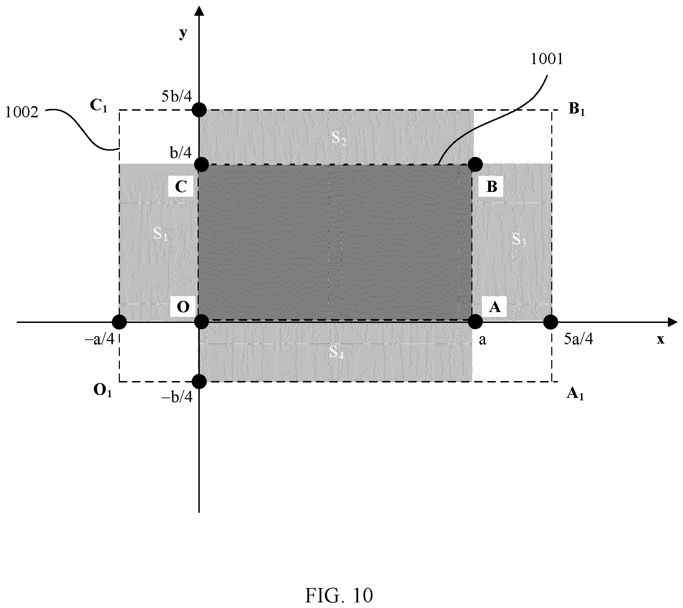

The terminal obtains the first area based on the largest transition area. FIG. 10 is a schematic diagram of a structure in which a first area is obtained based on a geometric area according to an embodiment of this application. The schematic diagram includes a geometric area 1001 formed by using points O, A, B, and C and a first area 1002 formed by using points O₁, A₁, B₁, and C₁. In FIG. 10, for ease of understanding, a rectangular coordinate system is established by using the point O in the foregoing original area as an origin. When the transition area includes the geometric area, and the size of the transition area is $\frac{5}{4}$ times the size of the original area, it can be learned from FIG. 10 that the largest transition area may include: an area combined by the geometric area 1001 and an area S₁, an area combined by the geometric area 1001 and an area S₂, an area combined by the geometric area 1001 and an area S₃, or an area combined by the geometric area 1001 and an area S₄. Straight lines on which outer boundaries (far away from boundaries of the geometric area) of the area S₁, the area S₂, the area S₃, and the area S₄ are located are selected, to form the first area (the first area includes the largest transition area), that is, an area formed by using the points O₁, A₁, B₁, and C₁. Similarly, the size of the geometric area is S_{G}, and the size of the transition area is S_{C}. In this case, because the second area needs to be included in the geometric area, and a transition area of the second area needs to be included in the geometric area, when the transition area of the second area is calculated, a calculation formula of an intersection over union IOU of the geometric area and the transition area of the second area is: $IOU = \frac{{S}_{G}}{{S}_{C} + {S}_{G} - {S}_{C}} ,$ that is, $IOU = \frac{{S}_{C}}{{S}_{G}}$

If a preset intersection over union IOU is not less than 0.8, a smallest transition area, of the second area, obtained according to an inequality calculation rule is $\frac{4}{5} {S}_{G}$.

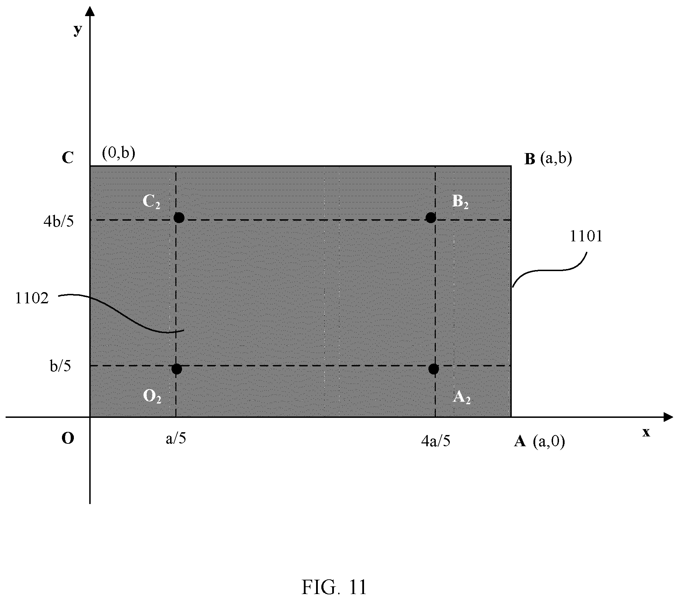

The terminal obtains the second area based on the smallest transition area. FIG. 11 is a schematic diagram of a structure in which a second area is obtained based on a geometric area according to an embodiment of this application. The schematic diagram includes a geometric area 1101 formed by using points O, A, B, and C and a second area 1102 formed by using points O₂, A₂, B₂, and C₂. In FIG. 10, for ease of understanding, a rectangular coordinate system is established by using the point O in the foregoing geometric area as an origin. When the transition area of the second area is included in the geometric area, and a size of the transition area of the second area is $\frac{4}{5}$ times the size of the geometric area, it can be learned from FIG. 11 that the transition area may include: a rectangular area formed when x = 0, $x = \frac{4}{5} a$, y = 0, and y = b, a rectangular area formed when $x = \frac{1}{5} a , x = \frac{4}{5} a$, y = 0, and y = b, a rectangular area formed when x = 0, x = a, y = 0, and $y = \frac{4}{5} b$, or a rectangular area formed when x = 0, x = a, $y = \frac{1}{5} b$, and $y = \frac{4}{5} b$. A rectangular area formed when $x = \frac{1}{5} a , x = \frac{4}{5} a , y = \frac{1}{5} b$, and $y = \frac{4}{5} b$, that is, the area 1102 formed by using the points O₂, A₂, B₂, and C₂, is selected as the second area (the second area is included in the smallest transition area). Finally, after obtaining the first area and/or the second area, the terminal generates the screenshot area based on the first area and/or the second area.

Optionally, the terminal may identify all interface elements (for example, the interface element may be a text, a symbol, a number, and/or an image) in the first area by using an AI target detection technology, select a boundary area formed by elements that are closest to four boundaries and that are in the first area, make a smallest area including the boundary area in the first area, and use the smallest area as the screenshot area.

AI target detection is image segmentation based on target geometry and statistical features. This technology combines segmentation and recognition of a target. For example, a histogram of oriented gradient (histogram of oriented gradient, HOG) technology in the target detection technology and a support vector machine (support vector machine, SVM) classifier have been widely applied to image recognition. Currently, although many detection algorithms are continuously proposed, ideas of HOG and SVM are basically used. An image is mainly divided into small areas (the area is referred to as a cell unit), histograms of gradients or edge directions of pixels in these cell units are collected, and these histograms are combined to form a feature descriptor. During image recognition, the HOG technology and the SVM classifier are used to implement target detection based on image features.

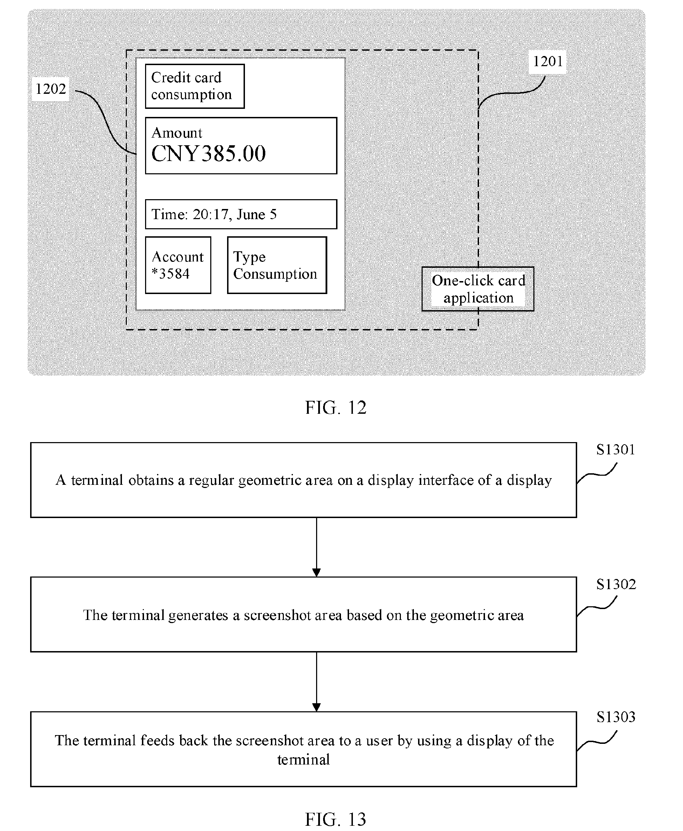

FIG. 12 is a schematic diagram of a scenario in which a screenshot area is generated according to an embodiment of this application. The schematic diagram includes a first area 1201 and a screenshot area 1202. All interface elements in the first area 1201 are identified by using the AI target detection technology, boundary areas that are closest to four boundaries and that are in the first area (for example, a boundary area at an upper boundary is an area covering an interface element "consumption card type") are selected, and a smallest area including the boundary areas is obtained. In this way, the screenshot area is obtained.

Optionally, the terminal may calculate, based on four boundaries of the first area and four boundaries of the second area, a variance of pixel values of candidate boundaries (for example, a left boundary of the first area and a left boundary of the second area) between boundaries in a same orientation, select a candidate boundary with a smallest variance of pixel values as a boundary of the screenshot area, and form the screenshot area based on the selected boundaries in four orientations.

Specifically, the screenshot area falls between the first area and the second area. To determine the screenshot area, four boundaries of the screenshot area need to be determined. Herein, the left boundary of the first area and the left boundary of the second area are used as an example. If there are eight boundaries between the left boundary of the first area and the left boundary of the second area (if the boundaries are named a boundary 1, a boundary 2, a boundary 3, a boundary 4, a boundary 5, a boundary 6, a boundary 7, and a boundary 8), and if a selected step s is 2 (the step s is used to select the candidate boundary, and the step s is a preset parameter), candidate boundaries used for calculation are the boundary 2, the boundary 4, the boundary 6, and the boundary 8. The terminal calculates the variance of the pixel values of the candidate boundaries based on the pixel values of the candidate boundaries and according to a variance calculation formula. For example, if the variance of the pixel value of the boundary 2 is 1.3, the variance of the pixel value of the boundary 4 is 0.8, the variance of the pixel value of the boundary 6 is 0.6, and the variance of the pixel value of the boundary 8 is 1.0, the boundary 6 is selected as a left boundary of an area to be captured by the user. Similarly, a method for selecting a right boundary, an upper boundary, and a lower boundary of the foregoing screenshot area is the same as a method for selecting the left boundary of the foregoing screenshot area. Details are not described herein again. The four selected boundaries of the screenshot area form the screenshot area.

Further, FIG. 13 is a schematic flowchart of a screenshot area determining method according to an embodiment of this application. As shown in FIG. 13, the method in this embodiment of this application may include the following steps.

Step S1301: Obtain a regular geometric area on a display interface of a display.

Specifically, the terminal may obtain the geometric area on the display interface of the display in the following two manners. In a first manner, a user may circle the regular geometric area on the terminal by using a controller (for example, a mouse), and the terminal receives the regular geometric area circled by the user on the display of the terminal. In a second manner, the terminal obtains a touch track of the user on the display, and then obtains the regular geometric area based on the touch track.

Specifically, how the terminal obtains the touch track of the user on the display, and then obtains the regular geometric area based on the touch track is as follows: First, the terminal obtains the touch track of the user on the display. Refer to FIG. 6. The terminal may detect a touch track (the touch track may be regular or irregular) drawn by the user with a knuckle on the terminal. In addition, the terminal may also detect a touch track drawn by the user on the terminal by using a controller (for example, a mouse), to obtain the touch track of the user on the display. Second, the terminal obtains the regular geometric area based on the touch track. Specifically, the terminal makes an externally tangent rectangle of the touch track for the touch track, to obtain the regular geometric area. To be specific, based on an orientation of an upper boundary of the terminal, the terminal makes a straight line parallel to the upper boundary of the terminal, and there is only one intersection point of the straight line and the touch track. Similarly, the terminal separately makes straight lines of the touch track in orientations of a lower boundary, a left boundary, and a right boundary of the terminal. A rectangular area formed by the four straight lines is the geometric area.

Step S1302: The terminal generates the screenshot area based on the geometric area.

Optional solution 1: The terminal calculates an intersection over union IOU between each of a plurality of candidate screenshot areas and the geometric area, to directly select a candidate screenshot area with a largest value of the intersection over union IOU as the screenshot area. For a calculation principle of the intersection over union IOU, refer to the descriptions in FIG. 7. Details are not described herein again.

Optional solution 2: The terminal may also generate the screenshot area based on a first area and/or a second area. The first area and/or the second area are/is an area generated by the terminal based on the geometric area.

For details, refer to the schematic diagram of the scenario described in FIG. 9. The terminal obtains the first area and/or the second area based on an optimization parameter (for example, a preset gain value herein) and the geometric area. Alternatively, for details, refer to the schematic diagram of the scenario described in FIG. 10 (FIG. 11). The terminal calculates a largest transition area (a smallest transition area) of the first area (the second area) based on an optimization parameter (for example, an intersection over union IOU herein), and generates the screenshot area based on the largest transition area (the smallest transition area).

After obtaining the first area and/or the second area, the terminal generates the screenshot area based on the first area and/or the second area.

Optionally, refer to the schematic diagram of the scenario described in FIG. 12. The terminal may identify all interface elements (for example, the interface element may be a text, a symbol, a number, and/or an image) in the first area by using an AI target detection technology, select an area that is closest to four boundaries in the first area and that covers the interface elements, make a smallest area including a boundary area in the first area, and use the smallest area as the screenshot area.

Optionally, the terminal may calculate, based on four boundaries of the first area and four boundaries of the second area, a variance of pixel values of candidate boundaries (for example, a left boundary of the first area and a left boundary of the second area) between boundaries in a same orientation, select a candidate boundary with a smallest variance of pixel values as a boundary of the screenshot area, and form the screenshot area based on the selected boundaries in four orientations.

Step S1303: The terminal feeds back the screenshot area to the user by using the display of the terminal.

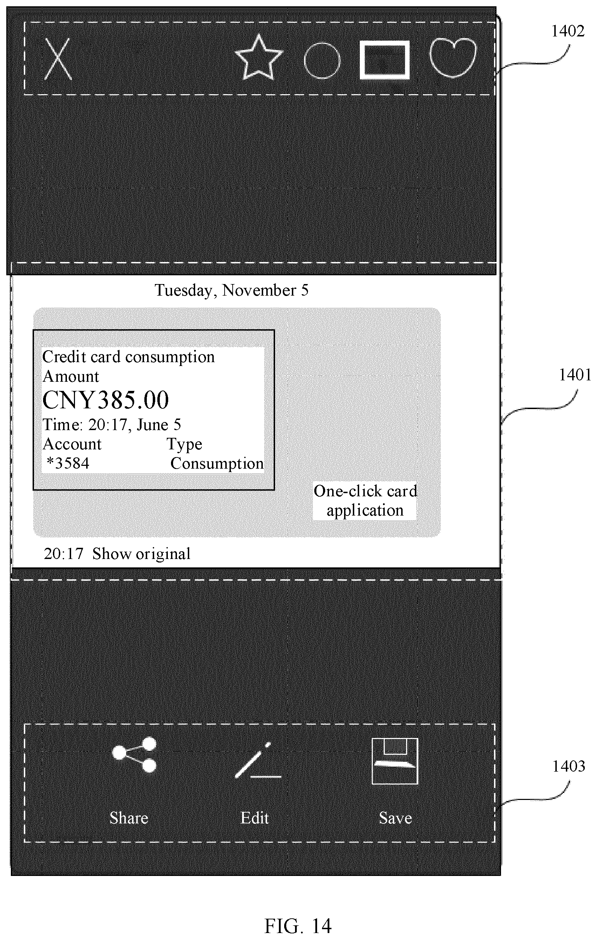

Specifically, the terminal feeds back the screenshot area to the user, and obtains a final screenshot according to processing performed by the user on the screenshot area (for example, the user selects a button on the display to adjust a shape and a location of the screenshot area). The terminal provides, for the user based on the screenshot area, a common window for editing the screenshot area, and completes the final screenshot based on a final result edited by the user. FIG. 14 is a schematic diagram of a scenario in which a screenshot area is edited according to an embodiment of this application. The schematic diagram of the scenario includes a screenshot area 1401, a shape editing area 1402, and a picture editing area 1403. The user may tap, in the shape editing area based on the area 1401, a button for changing a shape (for example, "a heart shape" or "a circle") of the screenshot, to obtain a screenshot after the shape is changed. The user may tap a button in the picture editing area based on the screenshot after the shape is changed, to perform a "Share", "Edit", or "Save" operation.

In the method described in FIG. 13, in one method, the regular geometric area can be obtained based on the touch track. In addition, the candidate screenshot area closest to the geometric area can be intelligently selected from the plurality of candidate screenshot areas. Therefore, an area to be captured by the user is more efficiently and accurately obtained. In the other method, the geometric area can be optimized as the first area or the second area by using the preset gain value or the intersection over union IOU. This can avoid information loss caused by an error factor, and can determine the screenshot area more intelligently, efficiently, and accurately.

The schematic flowchart of the method in embodiments of this application is described above in detail, and an apparatus in embodiments of this application is provided below.

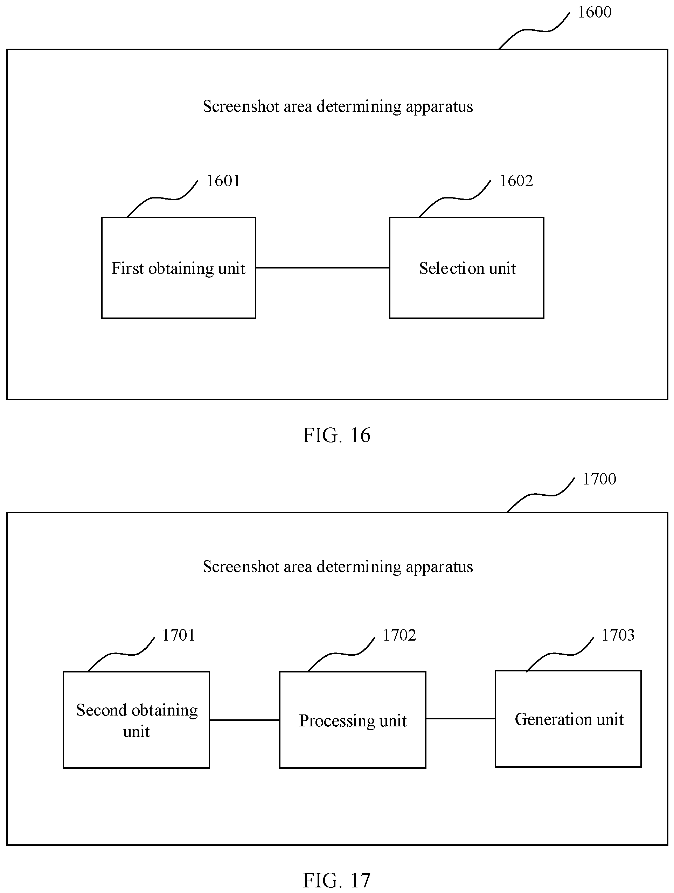

FIG. 16 is a schematic diagram of a structure of a screenshot area determining apparatus 1600 according to an embodiment of this application. The apparatus 1600 may be the foregoing terminal, or may be a component in the terminal. The terminal may include a first obtaining unit 1601 and a selection unit 1602. Detailed descriptions of the units are as follows:
The first obtaining unit 1601 is configured to obtain a regular geometric area on a display interface of a display. The selection unit 1602 is configured to select, from a plurality of candidate screenshot areas on the display interface of the display, one candidate screenshot area closest to the geometric area as a screenshot area. The candidate screenshot areas are a plurality of areas including one or more complete interface elements.

In an implementable solution, the first obtaining unit is configured to: obtain a touch track of a user on the display, and obtain the regular geometric area based on the touch track.

In another implementable solution, the first processing unit is specifically configured to calculate an intersection over union IOU between each of the plurality of candidate screenshot areas on the display interface of the display and the geometric area.

It can be learned that, the candidate screenshot area (that is, an area closest to the geometric area) with the largest intersection over union IOU is selected as the screenshot area by using a method for calculating the intersection over union IOU. When the largest candidate screenshot area and the geometric area have a same intersection set, a union set is the smallest; when they have a same union set, an intersection set is the largest; and when they have a different intersection set and a different union set, a ratio of the intersection set to the union set is the largest. Therefore, the selected candidate screenshot area with the largest intersection over union IOU is a candidate screenshot area closest to the geometric area. Therefore, the candidate screenshot area with the largest intersection over union IOU is used as the screenshot area, so that an area most desired by the user can be captured.

In another implementable solution, a calculation formula of the intersection over union IOU between the candidate screenshot area and the geometric area is as follows: $IOU = \frac{{S}_{area \left(C\right) ∩ area \left(G\right)}}{{S}_{area \left(C\right) ∪ area \left(G\right)}}$
*S*_{*area*(C)∩*area*(*G*)} is a size of an intersection set of a candidate screenshot area C and a geometric area G, and
*S*_{*area*(C)∪*area*(*G*)} is a size of a union set of the candidate screenshot area C and the geometric area G.

In another implementable solution, the geometric area is a rectangular area, and all four edges of the rectangular area are tangent to the touch track and parallel to edges of the display.

It should be noted that for implementation of the units, further refer to the corresponding descriptions in the screenshot area determining method embodiment shown in FIG. 13.

In the screenshot area determining apparatus described in FIG. 16, the terminal can obtain the regular geometric area based on a touch track, or can directly obtain the regular geometric area circled by a user, and can intelligently select, from the plurality of candidate screenshot areas, a candidate screenshot area closest to the geometric area. Therefore, an area to be captured by the user is more efficiently and accurately obtained.

FIG. 17 is a schematic diagram of a structure of a screenshot area determining apparatus 1700 according to an embodiment of this application. The apparatus 1700 may be the foregoing terminal, or may be a component in the terminal. The terminal includes a second obtaining unit 1701, a processing unit 1702, and a generation unit 1703. Specific applications of the units are as follows:
The second obtaining unit 1701 is configured to obtain a regular geometric area on a display interface of a display. The processing unit 1702 is configured to obtain a target area based on an optimization parameter and the geometric area. The target area includes at least one of a first area and a second area, and the optimization parameter is a preset gain value or an intersection over union IOU.

The generation unit 1703 is configured to generate a screenshot area based on the target area.

In an implementable solution, the second obtaining unit is configured to: obtain a touch track of a user on the display, and obtain the regular geometric area based on the touch track.

In an implementable solution, the target area includes the first area. The generation unit is specifically configured to generate a first sub-area that can cover all interface elements in the first area and that falls within the first area. The first sub-area is used as the screenshot area.

It can be learned that, in the foregoing method, interface elements that do not completely fall within the first area can be excluded, so that all interface elements of the obtained first sub-area are interface elements that are completely included in the first area. Therefore, interface elements in the screenshot area (the first sub-area herein) are elements to be captured by the user.

In another implementable solution, the target area includes the first area and the second area. The generation unit is specifically configured to generate the screenshot area based on the first area and the second area.

In another implementable solution, the generation unit is specifically configured to: select, from a target boundary range, a boundary with a smallest variance of pixel values as a target boundary, where the target boundary range is a range between edges that are in a same orientation and that are of the first area and the second area; and form the screenshot area based on four target boundaries selected from the target boundary ranges in four orientations.

It can be learned that, if a pixel variance in an area in an image is relatively smaller, it indicates that pixel values in the area are closer to each other. Therefore, when a variance of pixels in a row in the image is very small, it indicates that there is no to-be-displayed interface element in the row of pixels. Therefore, in this embodiment of this application, when a boundary with a smallest pixel variance is selected as a boundary of the screenshot area, it can be ensured that all interface elements in an area enclosed by the boundary are complete interface elements.

In another implementable solution, the optimization parameter is the intersection over union IOU, and the target area includes the first area and the second area. The obtaining a target area based on an optimization parameter and the geometric area includes: generating at least one largest transition area and at least one smallest transition area based on the geometric area and a preset intersection over union IOU threshold; obtaining the first area based on the at least one largest transition area, where the first area includes the at least one largest transition area; and obtaining the second area based on the at least one smallest transition area, where the second area is included in the at least one smallest transition area.

In another implementable solution, the optimization parameter is the preset gain value, and the target area is the first area. The processing unit is specifically configured to obtain the first area based on a preset positive gain value and the geometric area. The first area includes the geometric area, and the positive gain value is used to enlarge the geometric area.

In another implementable solution, the optimization parameter is the gain value, and the target area is a first area and a second area. The processing unit is specifically configured to: generate the first area based on a preset positive gain value and the geometric area, and generate the second area based on a preset negative gain value and the geometric area. The negative gain value is used to reduce the geometric area.

It can be learned that, in the foregoing method, the geometric area can be enlarged and reduced by using the preset gain value. This can avoid information loss caused by an error, and can capture content to be circled by the user in the screenshot area more accurately.

It should be noted that for implementation of the units, further refer to the corresponding descriptions in the screenshot area determining method embodiment shown in FIG. 13.

It can be learned from the screenshot area determining apparatus described in FIG. 17 that, in the foregoing method, the geometric area can be optimized, by using the preset gain value or the intersection over union IOU, into the first area (for example, a largest screenshot area obtained after the geometric area is enlarged) or the second area (for example, a smallest screenshot area obtained after the geometric area is reduced). This can avoid information loss caused by an error factor, and can determine the screenshot area more intelligently, efficiently, and accurately.

An embodiment of this application further provides a computer-readable storage medium. The computer-readable storage medium stores instructions. When the instructions are run on a computer or a processor, the computer or the processor is enabled to perform one or more steps in any one of the foregoing methods. When the modules in the foregoing signal processing terminal device are implemented in a form of a software function unit and sold or used as an independent product, the modules may be stored in the computer-readable storage medium.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a special-purpose computer, a computer network, or another programmable terminal device. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

In conclusion, by implementing this embodiment of this application, the server obtains profile information of a user. The profile information includes vector information and tag information. A song library is searched for songs based on the vector information, to obtain a first song set. The song library is searched for songs based on the tag information, to obtain a second song set. The first song set and the second song set are fused in gradient fusion, proportional fusion, hybrid fusion, and/or another fusion manner, to obtain a new song set. In the foregoing method, a multi-channel recall method of vector recall and tag recall is used. Both a song recalled by using a vector and a song recalled by using a tag meet the foregoing song listening preference of the user. The new song set obtained after fusion can cover more songs that meet the song listening preference of the user, thereby increasing song diversity.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes various media that can store program code, such as a ROM, a RAM, a magnetic disk, or an optical disc. In a case that no conflict occurs, this embodiment and technical features in the implementation solutions may be randomly combined.

What is disclosed above is merely example embodiments of this application, and certainly is not intended to limit the protection scope of this application. Therefore, equivalent variations made in accordance with the claims of this application shall fall within the scope of this application.

## Claims

1. A screenshot area determining method, comprising:
obtaining (S1301) a regular geometric area on a display interface of a display; and
selecting (S1302), from a plurality of candidate screenshot areas on the display interface of the display, one candidate screenshot area closest to the geometric area as a screenshot area, wherein the candidate screenshot areas are a plurality of areas comprising one or more complete interface elements;
wherein the selecting (S1302), from a plurality of candidate screenshot areas on the display interface of the display, one candidate screenshot area closest to the geometric area as a screenshot area comprises:
calculating an intersection over union, IOU, between each of the plurality of candidate screenshot areas on the display interface of the display and the geometric area; and
selecting a candidate area with a largest intersection over union, IOU, as the screenshot area.

2. The method according to claim 1, wherein the obtaining (S1301) a regular geometric area on a display interface of a display comprises:
obtaining a touch track of a user on the display; and
obtaining the regular geometric area based on the touch track.

3. The method according to claim 1, wherein a calculation formula of the intersection over union, IOU between the candidate screenshot area and the geometric area is as follows: $IOU = \frac{{S}_{area \left(C\right) ∩ area \left(G\right)}}{{S}_{area \left(C\right) ∪ area \left(G\right)}} ,$ wherein
*S*_{*area*(C)∩*area*(*G*)} is a size of an intersection set of a candidate screenshot area C and a geometric area G, and *S*_{*area*(C)∪*area*(*G*)} is a size of a union set of the candidate screenshot area C and the geometric area G.

4. The method according to claim 2, wherein the geometric area is a rectangular area, and all four edges of the rectangular area are tangent to the touch track and parallel to edges of the display.

5. A screenshot area determining method, comprising:
obtaining (S1301) a regular geometric area on a display interface of a display;
obtaining a target area based on an optimization parameter and the geometric area, wherein the target area comprises at least one of a first area and a second area, the first area comprises the geometric area, the second area is comprised in the geometric area, and the optimization parameter is a preset gain value or an intersection over union, IOU; and
generating (S1302) a screenshot area based on the target area.

6. The method according to claim 5, wherein the obtaining (S1301) a regular geometric area on a display interface of a display comprises:
obtaining a touch track of a user on the display; and
obtaining the regular geometric area based on the touch track.

7. The method according to claim 5 or 6, wherein the target area comprises the first area, and the generating (S1302) a screenshot area based on the target area comprises:
generating a first sub-area that can cover all interface elements in the first area and that falls within the first area, wherein the first sub-area is used as the screenshot area.

8. The method according to claim 5 or 6, wherein the target area comprises the first area and the second area, and the generating (S1302) a screenshot area based on the target area comprises:
generating the screenshot area based on the first area and the second area.

9. The method according to claim 8, wherein the generating a screenshot area based on the first area and the second area comprises:
selecting, from a target boundary range, a boundary with a smallest variance of pixel values as a target boundary, wherein the target boundary range is a range between edges that are in a same orientation and that are of the first area and the second area; and
forming the screenshot area based on four target boundaries selected from the target boundary ranges in four orientations.

10. The method according to any one of claims 5 to 7, wherein the optimization parameter is the IOU, the target area comprises the first area, and the obtaining a target area based on an optimization parameter and the geometric area comprises:
generating at least one largest transition area based on the geometric area and a preset intersection over union, IOU threshold; and
obtaining the first area based on the at least one largest transition area, wherein the first area comprises the at least one largest transition area.

11. The method according to claim 5, 6, 8, or 9, wherein the optimization parameter is the IOU, the target area comprises the first area and the second area, and the obtaining a target area based on an optimization parameter and the geometric area comprises:
generating at least one largest transition area and at least one smallest transition area based on the geometric area and a preset intersection over union, IOU threshold;
obtaining the first area based on the at least one largest transition area, wherein the first area comprises the at least one largest transition area; and
obtaining the second area based on the at least one smallest transition area, wherein the second area is comprised in the at least one smallest transition area.

12. The method according to any one of claims 5 to 7, wherein the optimization parameter is the preset gain value, the target area is the first area, and the obtaining a target area based on an optimization parameter and the geometric area comprises:
enlarging the geometric area based on a preset positive gain value, to obtain the first area.

13. The method according to claim 5, 6, 8, or 9, wherein the optimization parameter is the preset gain value, the target area is the first area and the second area, and the obtaining a target area based on an optimization parameter and the geometric area comprises:
enlarging the geometric area based on a preset positive gain value, to obtain the first area; and
reducing the geometric area based on a preset negative gain value, to obtain the second area.

14. A computer-readable storage medium (221), wherein the computer-readable storage medium (221) stores a computer program, and when the computer program is executed by a processor, the processor is enabled to implement the screenshot area determining method according to any one of claims 1 to 4 or claims 5 to 13.

## Patentansprüche

1. Bildschirmfotobereichsbestimmungsverfahren, das Folgendes umfasst:
Erhalten (S1301) eines regelmäßigen geometrischen Bereichs auf einer Anzeigeschnittstelle einer Anzeige; und
Auswählen (S1302), aus einer Mehrzahl von Kandidaten-Bildschirmfotobereichen auf der Anzeigeschnittstelle der Anzeige, eines Kandidaten-Bildschirmfotobereichs, der dem geometrischen Bereich am nächsten liegt, als einen Bildschirmfotobereich, wobei die Kandidaten-Bildschirmfotobereiche eine Mehrzahl von Bereichen sind, die ein oder mehrere vollständige Schnittstellenelemente umfassen;
wobei das Auswählen (S1302), aus einer Mehrzahl von Kandidaten-Bildschirmfotobereichen auf der Anzeigeschnittstelle der Anzeige, eines Kandidaten-Bildschirmfotobereichs, der dem geometrischen Bereich am nächsten liegt, als einen Bildschirmfotobereich Folgendes umfasst:
Berechnen eines Verhältnisses von Schnittmenge zu Vereinigungsmenge, IOU (Intersection Over Union), zwischen jedem der Mehrzahl von Kandidaten-Bildschirmfotobereichen auf der Anzeigeschnittstelle der Anzeige und dem geometrischen Bereich; und
Auswählen eines Kandidaten-Bereichs mit einem größten Verhältnis von Schnittmenge zu Vereinigungsmenge, IOU, als den Bildschirmfotobereich.

2. Verfahren nach Anspruch 1, wobei das Erhalten (S1301) eines regelmäßigen geometrischen Bereichs auf einer Anzeigeschnittstelle einer Anzeige Folgendes umfasst:
Erhalten einer Berührungsspur eines Benutzers auf der Anzeige; und
Erhalten des regulären geometrischen Bereichs basierend auf der Berührungsspur.

3. Verfahren nach Anspruch 1, wobei eine Berechnungsformel für das Verhältnis von Schnittmenge zu Vereinigungsmenge, IOU, zwischen dem Kandidaten-Bildschirmfotobereich und dem geometrischen Bereich wie folgt ist: $IOU = \frac{{S}_{Bereich \left(K\right) ∩ Bereich \left(G\right)}}{{S}_{Bereich \left(K\right) ∪ Bereich \left(G\right)}}$, wobei
*S*_{Bereich(K)∩Bereich(G)} eine Größe einer Schnittmenge eines Kandidaten-Bildschirmfotobereichs K und eines geometrischen Bereichs G ist, und
*S*_{Bereich(K)∪Bereich(G)} eine Größe einer Vereinigungsmenge des Kandidaten-Bildschirmfotobereichs K und des geometrischen Bereichs G ist.

4. Verfahren nach Anspruch 2, wobei der geometrische Bereich ein rechteckiger Bereich ist und alle vier Kanten des rechteckigen Bereichs tangential zu der Berührungsspur und parallel zu Kanten der Anzeige sind.

5. Bildschirmfotobereichsbestimmungsverfahren, das Folgendes umfasst:
Erhalten (S1301) eines regelmäßigen geometrischen Bereichs auf einer Anzeigeschnittstelle einer Anzeige;
Erhalten eines Zielbereichs basierend auf einem Optimierungsparameter und dem geometrischen Bereich, wobei der Zielbereich mindestens einen eines ersten Bereichs und eines zweiten Bereichs umfasst, wobei der erste Bereich den geometrischen Bereich umfasst, der zweite Bereich in dem geometrischen Bereich enthalten ist und der Optimierungsparameter ein voreingestellter Verstärkungswert oder ein Verhältnis von Schnittmenge zu Vereinigungsmenge, IOU, ist; und
Erzeugen (S1302) eines Bildschirmfotobereichs basierend auf dem Zielbereich.

6. Verfahren nach Anspruch 5, wobei das Erhalten (S1301) eines regelmäßigen geometrischen Bereichs auf einer Anzeigeschnittstelle einer Anzeige Folgendes umfasst:
Erhalten einer Berührungsspur eines Benutzers auf der Anzeige; und
Erhalten des regulären geometrischen Bereichs basierend auf der Berührungsspur.

7. Verfahren nach Anspruch 5 oder 6, wobei der Zielbereich den ersten Bereich umfasst und das Erzeugen (S1302) eines Bildschirmfotobereichs basierend auf dem Zielbereich Folgendes umfasst:
Erzeugen eines ersten Teilbereichs, der alle Schnittstellenelemente in dem ersten Bereich abdecken kann und der in den ersten Bereich fällt, wobei der erste Teilbereich als der Bildschirmfotobereich verwendet wird.

8. Verfahren nach Anspruch 5 oder 6, wobei der Zielbereich den ersten Bereich und den zweiten Bereich umfasst und das Erzeugen (S1302) eines Bildschirmfotobereichs basierend auf dem Zielbereich Folgendes umfasst:
Erzeugen des Bildschirmfotobereichs basierend auf dem ersten Bereich und dem zweiten Bereich.

9. Verfahren nach Anspruch 8, wobei das Erzeugen eines Bildschirmfotobereichs basierend auf dem ersten Bereich und dem zweiten Bereich Folgendes umfasst:
Auswählen, aus einem Zielgrenzbereich, einer Grenze mit einer kleinsten Varianz von Pixelwerten als eine Zielgrenze, wobei der Zielgrenzbereich ein Bereich zwischen Kanten ist, die sich in einer gleichen Ausrichtung befinden und die zu dem ersten Bereich und dem zweiten Bereich gehören; und
Bilden des Bildschirmfotobereichs basierend auf vier Zielgrenzen, die aus den Zielgrenzbereichen in vier Ausrichtungen ausgewählt werden.

10. Verfahren nach einem der Ansprüche 5 bis 7, wobei der Optimierungsparameter das IOU ist, der Zielbereich den ersten Bereich umfasst und das Erhalten eines Zielbereichs basierend auf einem Optimierungsparameter und dem geometrischen Bereich Folgendes umfasst:
Erzeugen mindestens eines größten Übergangsbereichs basierend auf dem geometrischen Bereich und einem voreingestellten Schwellenwert für das Verhältnis von Schnittmenge zu Vereinigungsmenge, IOU; und
Erhalten des ersten Bereichs basierend auf dem mindestens einen größten Übergangsbereich, wobei der erste Bereich den mindestens einen größten Übergangsbereich umfasst.

11. Verfahren nach Anspruch 5, 6, 8 oder 9, wobei der Optimierungsparameter das IOU ist, der Zielbereich den ersten Bereich und den zweiten Bereich umfasst und das Erhalten eines Zielbereichs basierend auf einem Optimierungsparameter und dem geometrischen Bereich Folgendes umfasst:
Erzeugen mindestens eines größten Übergangsbereichs und mindestens eines kleinsten Übergangsbereichs basierend auf dem geometrischen Bereich und einem voreingestellten Schwellenwert für das Verhältnis von Schnittmenge zu Vereinigungsmenge, IOU;
Erhalten des ersten Bereichs basierend auf dem mindestens einen größten Übergangsbereich, wobei der erste Bereich den mindestens einen größten Übergangsbereich umfasst; und
Erhalten des zweiten Bereichs basierend auf dem mindestens einen kleinsten Übergangsbereich, wobei der zweite Bereich in dem mindestens einen kleinsten Übergangsbereich enthalten ist.

12. Verfahren nach einem der Ansprüche 5 bis 7, wobei der Optimierungsparameter der voreingestellte Verstärkungswert ist, der Zielbereich der erste Bereich ist und das Erhalten eines Zielbereichs basierend auf einem Optimierungsparameter und dem geometrischen Bereich Folgendes umfasst:
Vergrößern des geometrischen Bereichs basierend auf einem voreingestellten positiven Verstärkungswert, um den ersten Bereich zu erhalten.

13. Verfahren nach Anspruch 5, 6, 8 oder 9, wobei der Optimierungsparameter der voreingestellte Verstärkungswert ist, der Zielbereich der erste Bereich und der zweite Bereich ist und das Erhalten eines Zielbereichs basierend auf einem Optimierungsparameter und dem geometrischen Bereich Folgendes umfasst:
Vergrößern des geometrischen Bereichs basierend auf einem voreingestellten positiven Verstärkungswert, um den ersten Bereich zu erhalten; und
Reduzieren des geometrischen Bereichs basierend auf einem voreingestellten negativen Verstärkungswert, um den zweiten Bereich zu erhalten.

14. Computerlesbares Speichermedium (221), wobei das computerlesbare Speichermedium (221) ein Computerprogramm speichert und, wenn das Computerprogramm durch einen Prozessor ausgeführt wird, dem Prozessor ermöglicht wird, das Bildschirmfotobereichsbestimmungsverfahren nach einem der Ansprüche 1 bis 4 oder der Ansprüche 5 bis 13 zu implementieren.

## Revendications

1. Procédé de détermination de zone de capture d'écran, comprenant :
l'obtention (S1301) d'une zone géométrique régulière sur une interface d'affichage d'un afficheur ; et
la sélection (S1302), parmi une pluralité de zones de capture d'écran candidates sur l'interface d'affichage de l'afficheur, d'une zone de capture d'écran candidate la plus proche de la zone géométrique comme zone de capture d'écran, les zones de capture d'écran candidates étant une pluralité de zones comprenant un ou plusieurs éléments d'interface complets ;
la sélection (S1302), parmi une pluralité de zones de capture d'écran candidates sur l'interface d'affichage de l'afficheur, d'une zone de capture d'écran candidate la plus proche de la zone géométrique comme zone de capture d'écran, comprenant :
le calcul d'une intersection sur union, IOU, entre chacune de la pluralité de zones de capture d'écran candidates sur l'interface d'affichage de l'afficheur et la zone géométrique ; et
la sélection d'une zone candidate avec une plus grande intersection sur union, IOU, comme la zone de capture d'écran.

2. Procédé selon la revendication 1, l'obtention (S1301) d'une zone géométrique régulière sur une interface d'affichage d'un afficheur comprenant :
l'obtention d'une piste tactile d'un utilisateur sur l'afficheur ; et
l'obtention de la zone géométrique régulière sur la base de la piste tactile.

3. Procédé selon la revendication 1, une formule de calcul de l'intersection sur union, IOU, entre la zone de capture d'écran candidate et la zone géométrique étant la suivante : $IOU = \frac{{S}_{zone \left(C\right) ∩ zone \left(G\right)}}{{S}_{zone \left(C\right) ∪ zone \left(G\right)}} ,$ avec
*S*_{zone(C)∩zone(G)} étant une taille d'un ensemble d'intersection d'une zone de capture d'écran candidate C et d'une zone géométrique G, et
*S*_{zone(C)∪zone(G)} étant une taille d'un ensemble d'union de la zone de capture d'écran candidate C et de la zone géométrique G.

4. Procédé selon la revendication 2, la zone géométrique étant une zone rectangulaire, et les quatre bords de la zone rectangulaire étant tangents à la piste tactile et parallèles aux bords de l'afficheur.

5. Procédé de détermination de zone de capture d'écran, comprenant :
l'obtention (S1301) d'une zone géométrique régulière sur une interface d'affichage d'un afficheur ;
l'obtention d'une zone cible sur la base d'un paramètre d'optimisation et de la zone géométrique, la zone cible comprenant au moins une zone parmi une première zone et une deuxième zone, la première zone comprenant la zone géométrique, la deuxième zone étant comprise dans la zone géométrique, et le paramètre d'optimisation étant une valeur de gain prédéterminée ou une intersection sur union, IOU ; et
la génération (S1302) d'une zone de capture d'écran sur la base de la zone cible.

6. Procédé selon la revendication 5, l'obtention (S1301) d'une zone géométrique régulière sur une interface d'affichage d'un afficheur comprenant :
l'obtention d'une piste tactile d'un utilisateur sur l'afficheur ; et
l'obtention de la zone géométrique régulière sur la base de la piste tactile.

7. Procédé selon la revendication 5 ou 6, la zone cible comprenant la première zone, et la génération (S1302) d'une zone de capture d'écran sur la base de la zone cible comprenant :
la génération d'une première sous-zone qui peut couvrir tous les éléments d'interface dans la première zone et qui tombe dans la première zone, la première sous-zone étant utilisée comme la zone de capture d'écran.

8. Procédé selon la revendication 5 ou 6, la zone cible comprenant la première zone et la deuxième zone, et la génération (S1302) d'une zone de capture d'écran sur la base de la zone cible comprenant :
la génération de la zone de capture d'écran sur la base de la première zone et de la deuxième zone.

9. Procédé selon la revendication 8, la génération d'une zone de capture d'écran sur la base de la première zone et de la deuxième zone comprenant :
la sélection, sur la base d'une plage de limites cible, d'une limite avec une plus petite variance de valeurs de pixels en tant que limite cible, la plage de limites cible étant une plage entre des arêtes qui sont dans la même orientation et qui appartiennent à la première et à la deuxième zone ; et
la formation de la zone de capture d'écran sur la base de quatre limites cibles sélectionnées dans les plages de limites cibles dans quatre orientations.

10. Procédé selon l'une quelconque des revendications 5 à 7, le paramètre d'optimisation étant l'IOU, la zone cible comprenant la première zone, et l'obtention d'une zone cible sur la base d'un paramètre d'optimisation et de la zone géométrique comprenant :
la génération d'au moins une zone de transition la plus grande sur la base de la zone géométrique et d'un seuil d'intersection sur union, IOU, prédéterminé ; et
l'obtention de la première zone sur la base de l'au moins une zone de transition la plus grande, la première zone comprenant l'au moins une zone de transition la plus grande.

11. Procédé selon la revendication 5, 6, 8 ou 9, le paramètre d'optimisation étant l'IOU, la zone cible comprenant la première zone et la deuxième zone, et l'obtention d'une zone cible sur la base d'un paramètre d'optimisation et de la zone géométrique comprenant :
la génération d'au moins une zone de transition la plus grande et d'au moins une zone de transition la plus petite sur la base de la zone géométrique et d'un seuil d'intersection sur union, IOU, prédéterminé ;
l'obtention de la première zone sur la base de l'au moins une zone de transition la plus grande, la première zone comprenant l'au moins une zone de transition la plus grande ; et
l'obtention de la deuxième zone sur la base de l'au moins une zone de transition la plus petite, la deuxième zone étant comprise dans l'au moins une zone de transition la plus petite.

12. Procédé selon l'une quelconque des revendications 5 à 7, le paramètre d'optimisation étant la valeur de gain prédéterminée, la zone cible étant la première zone, et l'obtention d'une zone cible sur la base d'un paramètre d'optimisation et de la zone géométrique comprenant :
l'agrandissement de la zone géométrique sur la base d'une valeur de gain positive prédéterminée, pour obtenir la première zone.

13. Procédé selon la revendication 5, 6, 8 ou 9, le paramètre d'optimisation étant la valeur de gain prédéterminée, la zone cible étant la première zone et la deuxième zone, et l'obtention d'une zone cible sur la base d'un paramètre d'optimisation et de la zone géométrique comprenant :
l'agrandissement de la zone géométrique sur la base d'une valeur de gain positive prédéterminée, pour obtenir la première zone ; et
la réduction de la zone géométrique sur la base d'une valeur de gain négative prédéterminée, pour obtenir la deuxième zone.

14. Support de stockage lisible par ordinateur (221), le support de stockage lisible par ordinateur (221) stockant un programme informatique, et lorsque le programme informatique est exécuté par un processeur, le processeur étant autorisé à mettre en œuvre le procédé de détermination de zone de capture d'écran selon l'une quelconque des revendications 1 à 4 ou selon les revendications 5 à 13.
